# EUROPEAN PATENT APPLICATION

(11) **EP 2 557 838 A1**
(43) Date of publication of application: **13.02.2013**
(21) Application number: 11765384.0
(22) Date of filing: 22.03.2011
(51) Int. Cl.: H04W 28/04, H04J 11/00, H04L 1/16, H04L 29/08, H04W 16/28

(54) **MOBILE STATION APPARATUS, WIRELESS COMMUNICATION METHOD AND INTEGRATED CIRCUIT**

(30) Priority: 06.04.2010 JP 2010087443
(71) Applicant: Sharp Kabushiki Kaisha, Osaka-shi, Osaka 545-8522 (JP)
(72) Inventor: SUZUKI Shoichi, Osaka-shi Oaska 545-8522 (JP); NAKASHIMA Daiichiro, Osaka-shi Osaka 545-8522 (JP)
(74) Representative: Müller - Hoffmann & Partner
(86) International application number: PCT/JP2011/056812
(87) International publication number: WO 2011/125483

(57) **Abstract**

In a radio communication system where a mobile station apparatus uses a same PUSCH to transmit a plurality of pieces of uplink data to a base station apparatus, the uplink data stored in a HARQ buffer is effectively controlled. A mobile station apparatus 1 counts the number of times the uplink data is retransmitted for each piece of uplink data transmitted by the same PUSCH, and flushes, in case that the number of times a certain piece of uplink data is retransmitted reaches a predetermined value, only the uplink data in which the number of times of retransmission stored in the HARQ buffer reaches the predetermined value.

## Description

### Technical Field

The present invention relates to a mobile station apparatus, a radio communication method and an integrated circuit.

### Background Art

The evolution of a radio access system and a radio network in cellular mobile communication (hereinafter referred to as "Long Term Evolution (LTE)" or "Evolved Universal Terrestrial Radio Access (EUTRA)") is being examined in the third generation partnership project (3GPP). In the LTE, as a communication system of radio communication from a base station apparatus to a mobile station apparatus (downlink), an Orthogonal Frequency Division Multiplexing (OFDM) system, which is multicarrier transmission, is used. In addition, as a communication system of radio communication from a mobile station apparatus to a base station apparatus (uplink), an SC-FDMA (Single-Carrier Frequency Division Multiple Access) system, which is single carrier transmission, is used.

In the LTE, a HARQ (Hybrid Automatic Repeat reQuest) is used at a reception side in which data failed to be decoded is not discarded but is decoded by combined with retransmitted data. The base station apparatus uses Downlink Control Information (DCI) transmitted by a PDCCH (Physical Downlink Control Channel) to instruct the mobile station apparatus to perform new transmission or retransmission of a PUSCH (Physical Uplink Shared Channel) that is a channel for transmission of uplink data (or referred to as an uplink shared channel (UL-SCH)).

The base station apparatus receives the PUSCH transmitted by the mobile station apparatus, and transmits, by a PHICH (Physical HARQ Indicator Channel), a HARQ indicator indicating whether or not uplink data is successfully decoded. The HARQ indicator indicates ACK (ACKnowledgement) or NACK (Negative ACKnowledgement). In case that the base station apparatus successfully decodes the uplink data, the HARQ indicator indicates the ACK whereas, in case that the base station apparatus fails to decode the uplink data, the HARQ indicator indicates the NACK. The mobile station apparatus retransmits the PUSCH in case that the NACK is indicated by the HARQ indicator received in the PHICH or in case that an instruction to retransmit the PUSCH is provided using downlink control information. The base station apparatus can set the maximum number of times of transmission of the uplink data in the mobile station apparatus. The mobile station apparatus flushes the uplink data from a HARQ buffer in case that the number of times of transmission of the uplink data reaches the maximum number of times of transmission.

In the 3GPP, a radio access system and a radio network in which a frequency band wider than that of the LTE is utilized to realize higher-speed data communication (hereinafter referred to as "Long Term Evolution-Advanced (LTE-A)" or "Advanced Evolved Universal Terrestrial Radio Access (A-EUTRA)") are being examined. In the LTE-A, it is required that backward compatibility with the LTE be acquired, that is, the base station apparatus of the LTE-A simultaneously perform radio communication with the mobile station apparatuses of both the LTE-A and the LTE, and that the mobile station apparatus of the LTE-A perform radio communication with the base station apparatuses of both the LTE-A and the LTE. Therefore, channel structure of the LTE-A is being examined to be same channel structure of the LTE.

In the LTE-A, the use of MIMO (Multiple Input Multiple Output) SM (Spatial Multiplexing) for the PUSCH in order to improve spectrum efficiency in the uplink is being examined. By use of MIMO SM, the mobile station apparatus can spatially multiplex a plurality of pieces of uplink data in one PUSCH to transmit the data. Non-patent document 1 describes that mobile station apparatus performs HARQ independently for each of a plurality of pieces of uplink data transmitted by the same PUSCH. In order for the mobile station apparatus to perform HARQ independently for each of a plurality of pieces of uplink data transmitted by the same PUSCH, the base station apparatus needs to transmit the HARQ indicator for each piece of uplink data or to include information related to HARQ indicating new transmission or retransmission in downlink link control information for each piece of uplink data.

### Prior Art Document

### Non-patent Document

Non-patent document 1: "Investigation of Layer Shifting and HARQ Spatial Bundling for UL SU-MIMO", 3GPP TSG RAN WG1 Meeting #60, R1-101655, February 22-26, 2010.

### Disclosure of the Invention

### Problems to be Solved by the Invention

However, in conventional art, the mobile station apparatus performs HARQ for each of a plurality of pieces of uplink data transmitted by the same PUSCH, and then the number of times of transmission differs depending on each piece of uplink data transmitted by the same PUSCH. In the conventional art, it is not disclosed how the mobile station apparatus counts the number of times of transmission of a plurality of pieces of uplink data and in case that how many times a plurality of pieces of uplink data is transmitted, the mobile station apparatus will flush the uplink data from the HARQ buffer. In case that the base station apparatus does not recognize in what case the mobile station apparatus flushes the uplink data from the HARQ buffer, though the base station apparatus wants the mobile station apparatus to retransmit the uplink data, the mobile station apparatus disadvantageously flushes the uplink data from the HARQ buffer.

The present invention is made in view of the above point; an object of the present invention is to provide a mobile station apparatus, a radio communication method and an integrated circuit that effectively perform control on uplink data stored in a HARQ buffer in a radio communication system in which the mobile station apparatus transmits a plurality of pieces of uplink data to a base station apparatus using the same PUSCH.

### Means for Solving the Problems

(1) To achieve the above object, an embodiment of the present invention takes following measures. Specifically, a radio communication method of an embodiment of the present invention is characterized in that in the radio communication method used by a mobile station apparatus that uses a same uplink shared channel to transmit a plurality of uplink data to a base station apparatus, the method includes the steps of: by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and deleting, in case that the counter corresponding to at least one piece of the uplink data reaches a predetermined value, the uplink data from a buffer.

(2) In addition, a mobile station apparatus of an embodiment of the present invention is characterized in that in the mobile station apparatus that uses a same uplink shared channel to transmit a plurality of uplink data to a base station apparatus, the mobile station apparatus includes a counter that indicates a number of transmission for each of the plurality of uplink data, wherein the mobile station apparatus: sets, in case that performing new transmission of the uplink data, a counter corresponding to the uplink data subjected to the new transmission to "0"; increments, in case that performing retransmission of the uplink data, a counter corresponding to the uplink data subjected to the retransmission by "1"; and flushes, in case that the counter corresponding to at least one piece of the uplink data reaches a predetermined value, the uplink data from a buffer.

(3) Moreover, an integrated circuit of an embodiment of the present invention is characterized in that in the integrated circuit used by a mobile station apparatus that uses a same uplink shared channel to transmit a plurality of uplink data to a base station apparatus, the integrated circuit includes functions of: by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and deleting, in case that the counter corresponding to at least one piece of the uplink data reaches a predetermined value, the uplink data from a buffer.

(4) Furthermore, a radio communication method of an embodiment of the present invention is characterized in that in the radio communication method by a mobile station apparatus that uses a same uplink shared channel to transmit a plurality of uplink data to a base station apparatus, the method includes the steps of: by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and deleting, in case that the counter corresponding to at least one piece of the uplink data reaches a predetermined value, all the plurality of uplink data from a buffer.

(5) In addition, a mobile station apparatus of an embodiment of the present invention is characterized in that in the mobile station apparatus that uses a same uplink shared channel to transmit a plurality of uplink data to a base station apparatus, the mobile station apparatus includes a counter that indicates a number of transmission for each of the plurality of uplink data, wherein the mobile station apparatus: sets, in case that performing new transmission of the uplink data, a counter corresponding to the uplink data subjected to the new transmission to "0"; increments, in case that performing retransmission of the uplink data, a counter corresponding to the uplink data subjected to the retransmission by "1"; and flushes, in case that the counter corresponding to at least one piece of the uplink data reaches a predetermined value, all the plurality of uplink data from a buffer.

(6) Moreover, an integrated circuit of an embodiment of the present invention is characterized in that in the integrated circuit used by a mobile station apparatus that uses a same uplink shared channel to transmit a plurality of uplink data to a base station apparatus, the integrated circuit includes functions of: by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and deleting, in case that the counter corresponding to at least one piece of the uplink data reaches a predetermined value, all the plurality of uplink data from a buffer.

(7) Furthermore, a radio communication method of an embodiment of the present invention is characterized in that in the radio communication method by a mobile station apparatus that uses a same uplink shared channel to transmit a plurality of uplink data to a base station apparatus, the method includes the steps of: by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and deleting, in case that the counter corresponding to all the uplink data reaches a predetermined value, all the plurality of uplink data from a buffer.

(8) In addition, a mobile station apparatus of an embodiment of the present invention is characterized in that in the mobile station apparatus that uses a same uplink shared channel to transmit a plurality of uplink data to a base station apparatus, the mobile station apparatus includes a counter that indicates a number of transmission for each of the plurality of uplink data, wherein the mobile station apparatus: sets, in case that performing new transmission of the uplink data, a counter corresponding to the uplink data subjected to the new transmission to "0"; increments, in case that performing retransmission of the uplink data, a counter corresponding to the uplink data subjected to the retransmission by "1"; and flushes, in case that the counter corresponding to all the uplink data reaches a predetermined value, all the plurality of uplink data from a buffer.

(9) Moreover, an integrated circuit of an embodiment of the present invention is characterized in that in the integrated circuit used by a mobile station apparatus that uses a same uplink shared channel to transmit a plurality of uplink data to a base station apparatus, the integrated circuit includes functions of: by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and deleting, in case that the counter corresponding to all the uplink data reaches a predetermined value, all the plurality of uplink data from a buffer.

(10) Furthermore, a radio communication method of an embodiment of the present invention is characterized in that in the radio communication method by a mobile station apparatus that uses a same uplink shared channel to transmit a plurality of uplink data to a base station apparatus, the method includes the steps of: setting, in case that performing new transmission of any of the plurality of uplink data transmitted by the same uplink shared channel, a counter common to the plurality of uplink data transmitted by the same uplink shared channel to "0"; incrementing, in case that performing retransmission of all the plurality of uplink data transmitted by the same uplink shared channel, the counter by "1"; and deleting, in case that the counter reaches a predetermined value, all the uplink data from a buffer.

(11) In addition, a mobile station apparatus of an embodiment of the present invention is characterized in that in the mobile station apparatus that uses the same uplink shared channel to transmit a plurality of uplink data to a base station apparatus, the mobile station apparatus sets, in case that performing new transmission of any of the plurality of uplink data transmitted by the same uplink shared channel, a counter common to the plurality of uplink data transmitted by the same uplink shared channel to "0"; increments, in case that performing retransmission of all the plurality of uplink data transmitted by the same uplink shared channel, the counter by "1"; and flushes, in case that the counter reaches a predetermined value, all the uplink data from a buffer.

(12) Moreover, an integrated circuit of an embodiment of the present invention is characterized in that in the integrated circuit used by a mobile station apparatus that uses a same uplink shared channel to transmit a plurality of uplink data to a base station apparatus, the integrated circuit includes functions of: setting, in case that performing new transmission of any of the plurality of uplink data transmitted by the same uplink shared channel, a counter common to the plurality of uplink data transmitted by the same uplink shared channel to "0"; incrementing, in case that performing retransmission of all the plurality of uplink data transmitted by the same uplink shared channel, the counter by "1"; and deleting, in case that the counter reaches a predetermined value, all the uplink data from a buffer.

(13) In addition, a radio communication method of an embodiment of the present invention is characterized in that in the radio communication method by a mobile station apparatus that uses a same uplink shared channel to transmit a plurality of uplink data to a base station apparatus, the method includes the steps of: setting, in case that having received downlink control information for the uplink shared channel, a counter common to the plurality of uplink data transmitted by the same uplink shared channel to "0"; incrementing, in case that performing retransmission of the uplink data transmitted by the uplink channel with a non-adaptive HARQ (Hybrid Automatic Repeat reQuest), the counter by "1"; and deleting, in case that the counter reaches a predetermined value, all the uplink data from a buffer.

(14) Furthermore, a mobile station apparatus of an embodiment of the present invention is characterized in that in the mobile station apparatus that uses a same uplink shared channel to transmit a plurality of uplink data to a base station apparatus, the mobile station apparatus sets, in case that having received downlink control information for the uplink shared channel, a counter common to the plurality of uplink data transmitted by the same uplink shared channel to "0"; increments, in case that performing retransmission of the uplink data transmitted by the uplink channel with a non-adaptive HARQ (Hybrid Automatic Repeat reQuest), the counter by "1"; and flushes, in case that the counter reaches a predetermined value, all the uplink data from a buffer.

(15) Moreover, an integrated circuit of an embodiment of the present invention is characterized in that in the integrated circuit used by a mobile station apparatus that uses a same uplink shared channel to transmit a plurality of uplink data to a base station apparatus, the integrated circuit includes functions of: setting, in case that having received downlink control information for the uplink shared channel, a counter common to the plurality of uplink data transmitted by the same uplink shared channel to "0"; incrementing, in case that performing retransmission of the uplink data transmitted by the uplink channel with a non-adaptive HARQ (Hybrid Automatic Repeat reQuest), the counter by "1"; and deleting, in case that the counter reaches a predetermined value, all the uplink data from a buffer.

### Effect of the Invention

According to an embodiment of the present invention, in a radio communication system in which a mobile station apparatus uses the same PUSCH to transmit a plurality of uplink data to a base station apparatus, it is possible to effectively control uplink data stored in a HARQ buffer.

### Brief Description of the Drawings

Fig. 1 is a conceptual diagram of a radio communication system according to a first embodiment of the present invention;
Fig. 2 is a schematic diagram showing an example of the configuration of a downlink radio frame according to an embodiment of the present invention;
Fig. 3 is a schematic diagram showing an example of the configuration of an uplink radio frame according to an embodiment of the present invention;
Fig. 4 is a schematic diagram for illustrating an uplink HARQ process according to an embodiment of the present invention;
Fig. 5 is a flowchart showing the operation of the HARQ process according to an embodiment of the present invention;
Fig. 6 is a flowchart showing an example of the operation of a mobile station apparatus 1 according to an embodiment of the present invention;
Fig. 7 is a schematic block diagram showing the configuration of the mobile station apparatus 1 according to an embodiment of the present invention;
Fig. 8 is a schematic block diagram showing the configuration of a base station apparatus 3 according to an embodiment of the present invention;
Fig. 9 is a flowchart showing an example of the operation of a mobile station apparatus 1 according to a second embodiment of the present invention;
Fig. 10 is a flowchart showing an example of the operation of a mobile station apparatus 1 according to a third embodiment of the present invention;
Fig. 11 is a flowchart showing an example of the operation of a mobile station apparatus 1 according to a fourth embodiment of the present invention; and
Fig. 12 is a flowchart showing an example of the operation of a mobile station apparatus 1 according to a fifth embodiment of the present invention.

### Best Modes for Carrying Out the Invention

### (First embodiment)

A first embodiment of the present invention will be described in detail below with reference to accompanying drawings.

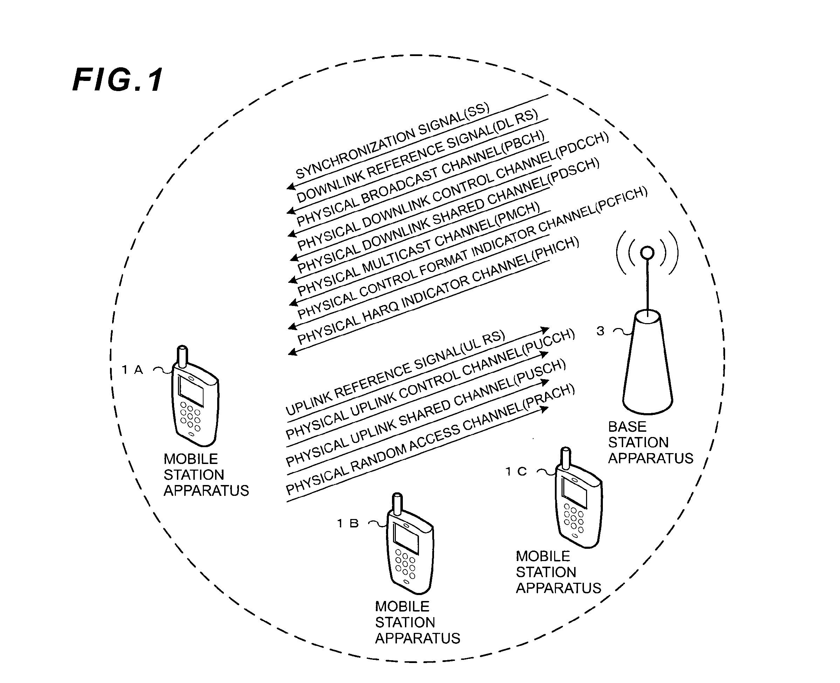

Fig. 1 is a conceptual diagram of a radio communication system according to the first embodiment of the present invention. In Fig. 1, the radio communication system includes mobile station apparatuses 1A to 1C and a base station apparatus 3. Fig. 1 shows that, in radio communication from the base station apparatus 3 to the mobile station apparatuses 1A to 1C (downlink), there are allocated a Synchronization signal (SS), a Downlink Reference Signal (DL RS), a Physical Broadcast Channel (PBCH), a Physical Downlink Control Channel (PDCCH), a Physical Downlink Shared Channel (PDSCH), a Physical Multicast Channel (PMCH), a Physical Control Format Indicator Channel (PCFICH) and a Physical Hybrid ARQ Indicator Channel (PHICH).

In addition, Fig. 1 shows that, in radio communication from the mobile station apparatuses 1A to 1C to the base station apparatus 3 (uplink), there are allocated an Uplink Reference Signal (UL RS), a Physical Uplink Control Channel (PUCCH), a Physical Uplink Shared Channel (PUSCH) and a Physical Random Access Channel (PRACH). In the following description, the mobile station apparatuses 1A to 1C are referred to as a mobile station apparatus 1.

The synchronization signal is a signal which the mobile station apparatus 1 uses to synchronize a frequency domain and a time domain in the downlink. The downlink reference signal is a signal which the mobile station apparatus 1 uses to synchronize the frequency domain and the time domain in the downlink, which the mobile station apparatus 1 uses to measure reception quality in the downlink or which the mobile station apparatus 1 uses to perform channel compensation of the PDSCH and the PDCCH. The PBCH is a physical channel that is used to broadcast a control parameter (system information) (Broadcast Channel: BCH) used in common in the mobile station apparatus 1. The PBCH is transmitted at intervals of 40 ms. The timing of the intervals of 40 ms is blind-detected in the mobile station apparatus 1.

The PDCCH is a physical channel that is used to transmit Downlink Control Information (DCI) such as a downlink assignment (also referred to as a downlink grant) and an uplink grant. The downlink assignment is formed with information on the modulation scheme and the coding rate for the PDSCH (Modulation and Coding Scheme: MCS), information indicating the allocation of radio resources and the like. The uplink grant is formed with information on the modulation scheme and the coding rate for the PUSCH, information indicating the allocation of radio resources and the like.

A plurality of formats is used for the downlink control information. The format for the downlink control information is referred to as a DCI format. For example, as the DCI format of the uplink grant, a DCI format 0 used in case that the mobile station apparatus 1 transmits the PUSCH with one transmission antenna port, a DCI format 0A used in case that the mobile station apparatus 1 transmits a plurality of pieces of uplink data using MIMO SM (Multiple Input Multiple Output Spatial Multiplexing) for the PUSCH or the like is prepared. The mobile station apparatus 1 simultaneously monitors the DCI format0 and the DCI format 0A for the PDCCH, and transmits, in case that having detected the DCI format0, the PUSCH with one transmission antenna port and transmits, in case that having detected the DCI format 0A, the PUSCH with a plurality of transmission antenna ports (MIMO SM).

The MIMO SM is a technology in which, in the channel of a plurality of spatial dimensions realized by a plurality of transmission antenna ports and a plurality of reception antenna ports, a plurality of signals is multiplexed to be transmitted and received. Here, the antenna port refers to a logical antenna used for signal processing; one antenna port may be formed with either one physical antenna or a plurality of physical antennas. On the transmission side using the MIMO SM, processing for forming an appropriate spatial channel for a plurality of signals (referred to as precoding) is performed, and the signals on which the precoding processing has been performed are transmitted using a plurality of transmission antennas. On the reception side using the MIMO SM, processing for appropriately separating the signals multiplexed in the channel of the spatial dimensions is performed on the plurality of signals received using the plurality of reception antennas.

For example, the DCI format 0A includes: information indicating the allocation of radio resources in the PUSCH (Resource block assignment); a TPC (Transmission Power Control) command used for transmit power control of the PUSCH; information used for determining a cyclic shift used for the uplink reference signal time-multiplexed with the PUSCH (Cyclic shift for demodulation reference signal); the number of sequences that are spatially multiplexed; information that indicates precoding performed on those sequences (precoding information); information on the Modulation and Coding Scheme and Redundancy version (MCS&RV); and information that indicates the new transmission or retransmission of the uplink data (New Data Indicator: NDI). The redundancy version is information that indicates which part of a bit sequence having the uplink data coded the mobile station apparatus 1 transmits by the PUSCH.

The MCS&RV and the NDI included in the DCI format 0A are prepared for each of a plurality of pieces of uplink data controlled by the DCI format 0A. Specifically, the base station apparatus 3 uses the DCI format 0A to thereby set a transport block size, the modulation scheme and the coding rate for each piece of uplink data transmitted by the same PUSCH, and can instruct the mobile station apparatus 1 to perform the new transmission or retransmission for each piece of uplink data.

The mobile station apparatus 1 checks whether or not the NDI is toggled to thereby discriminate which of the new transmission and retransmission of the PUSCH is instructed. The mobile station apparatus 1, in case that having received the downlink assignment or the uplink grant, stores the NDI included in the received downlink assignment or the uplink grant. Here, in case that the mobile station apparatus 1 has already stored the NDI, whether or not the NDI is toggled is checked, and then a new NDI is overwritten. That the NDI is toggled indicates that the already stored NDI differs in its value from the received NDI; that the NDI is not toggled indicates that the already stored NDI is equal in its value to the received NDI.

In case that the NDI is toggled, the mobile station apparatus 1 determines that the downlink assignment or the uplink grant indicates the new transmission, and determines that the downlink assignment or the uplink grant indicates the retransmission in case that the NDI is not toggled. In the following, that the NDI is toggled is expressed to be that the downlink control information or the downlink assignment or the uplink grant indicates the new transmission. In the following, that the NDI is not toggled is expressed to be that the downlink control information or the downlink assignment or the uplink grant indicates the retransmission.

The coding method of downlink control information will be described. The base station apparatus 3 first adds, to the downlink control information, a sequence in which a Cyclic Redundancy Check (CRC) code generated based on the downlink control information is scrambled with an RNTI (Radio Network Temporary Identifier). The mobile station apparatus 1 changes the interpretation of the downlink control information by checking which RNTI the cyclic redundancy check code is scrambled with. For example, in case that the cyclic redundancy check code is scrambled with a C-RNTI (Cell-Radio Network Temporary Identity) allocated from the base station apparatus 3 to the mobile station apparatus 1 itself, the mobile station apparatus 1 determines that the downlink control information indicates a radio resource to be allocated to its own apparatus. In the following, that the cyclic redundancy check code scrambled with the RNTI is added to the downlink control information is simply expressed to be that the RNTI is included in the downlink control information or that the RNTI is included in the PDCCH.

The mobile station apparatus 1 performs decode processing on the PDCCH, descrambles, with the RNTI stored in its own apparatus, a sequence corresponding to the cyclic redundancy check code scrambled with the RNTI and determines that the PDCCH is successfully acquired in case that having detected existence of no error based on the descrambled cyclic redundancy check code. This processing is called blind decoding.

The PDSCH is a physical channel which is used to transmit system information other than the BCH or downlink data (Downlink Shared Channel: DL-SCH), which are not broadcasted with paging information (Paging Channel: PCH) or via the PBCH. The PMCH is a physical channel that is used to transmit information on MBMS (Multimedia Broadcast and Multicast Service) (Multicast Channel: MCH). The PCFICH is a physical channel that is used to transmit information indicating a region where the PDCCH is arranged. The PHICH is a physical channel that is used to transmit the HARQ indicator indicating whether or not the uplink data received by the base station apparatus 3 is successfully decoded.

In case that the base station apparatus 3 successfully decodes all uplink data included in the PUSCH, the HARQ indicator indicates ACK (ACKnowledgement) whereas, in case that the base station apparatus 3 fails to decode at least one piece of uplink data included in the PUSCH, the HARQ indicator indicates NACK (Negative ACKnowledgement). Note that, a plurality of HARQ indicators indicating whether or not decoding is successfully performed for each of a plurality of pieces of uplink data included by the same PUSCH may be transmitted by a plurality of PHICHs.

The uplink reference signal is a signal which is used for the base station apparatus 3 to synchronize the time domain in the uplink, which is used for the base station apparatus 3 to measure the reception quality in the uplink or which is used for the base station apparatus 3 to perform channel compensation of the PDSCH and the PDCCH. In the uplink reference signal, code multiplexing is used, and a plurality of different codes is used. For example, the different codes are generated by cyclically shifting (referred to as cyclic shift) a predetermined basic sequence; the different codes are generated by cyclic shifts having different shift amounts.

The PUCCH is a physical channel that is used to transmit Uplink Control Information (UCI) used for the control of communication, such as Channel Quality Information indicating the channel quality of the downlink, Scheduling Request (SR) indicating a request for the allocation of radio resources in the uplink and ACK/NACK indicating whether or not the downlink data received by the mobile station apparatus 1 is successfully decoded.

The PUSCH is a physical channel that is used to transmit the uplink data or the uplink control information. The PRACH is a physical channel that is used to transmit a random access preamble. The PRACH has the largest purpose of synchronizing the mobile station apparatus 1 with the base station apparatus 3 in the time domain, and is further used for initial access, handover, a reconnection request and a request for the allocation of uplink radio resources.

The uplink data (UL-SCH) and the downlink data (DL-SCH) are transport channels. A unit in which the uplink data is transmitted by the PUSCH and a unit in which the downlink data is transmitted by the PDSCH are called transport blocks. The transport block is a unit that is handled in a MAC (Media Access Control) layer; control on HARQ (retransmission) is performed for each transport block. In a physical layer, the transport block is associated with a code word; signal processing such as coding is performed for each code word. A transport block size is the number of bits in the transport block. The mobile station apparatus 1 recognizes the transport block size from: the number of Physical Resource Blocks (PRB) indicated by information included in the uplink grant or the downlink assignment and indicating the allocation of radio resources; and the MCS (MCS&RV).

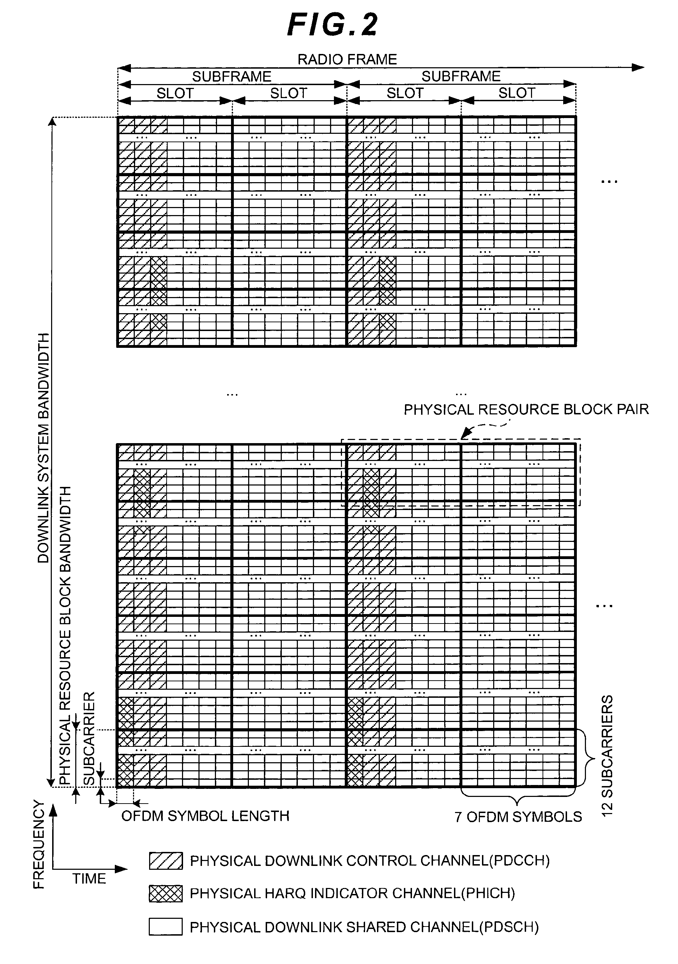

Fig. 2 is a schematic diagram showing an example of the configuration of a downlink radio frame according to an embodiment of the present invention. In Fig. 2, the horizontal axis represents a time domain and the vertical axis represents a frequency domain. As shown in Fig. 2, the downlink radio frame is formed with a plurality of downlink physical resource block (PRB) pairs (for example, a domain surrounded by broken lines of Fig. 2). The downlink Physical Resource Block pair is a unit for the allocation of radio resources or the like, and is formed with a frequency band of a predetermined width (PRB bandwidth: 180 kHz) and a time zone (two slots = one subframe: 1 ms).

One downlink physical resource block pair is formed with two downlink physical resource blocks contiguous in the time domain (PRB bandwidth × slot). One downlink physical resource block (in Fig. 2, a unit surrounded by thick lines) is formed with twelve subcarriers (15 kHz) in the frequency domain and is formed with seven OFDM (Orthogonal Frequency Division Multiplexing) symbols (71 µs) in the time domain.

In the time domain, there are a slot (0.5 ms) formed with the seven OFDM symbols (71 µs), the subframe (1 ms) formed with two slots and a radio frame (10 ms) formed with ten subframes. The time interval of 1 ms equal to that of the subframe is also referred to as a Transmit Time Interval (TTI). In the frequency domain, a plurality of downlink physical resource blocks is arranged according to the downlink bandwidth. A unit formed with one subcarrier and one OFDM symbol is referred to as a downlink resource element.

The arrangement of physical channels allocated to the downlink will be described below. In each subframe of the downlink, the PDCCH, the PCFICH, the PHICH, the PDSCH, the downlink reference signal and the like are arranged. The PDCCH is arranged from the OFDM symbol (in Fig. 2, a region hatched by leftward oblique lines) that is the head of the subframe. The number of OFDM symbols where the PDCCH is arranged differs in each subframe; the number of OFDM symbols where the PDCCH is arranged is broadcasted by the PCFICH. In each subframe, a plurality of PDCCHs is frequency-multiplexed and time-multiplexed.

The PCFICH is arranged in the OFDM symbol that is the head of the subframe, and is frequency-multiplexed with the PDCCH. The PHICH is frequency-multiplexed with the PDCCH within the same OFDM symbol (in Fig. 2, a region hatched by mesh lines). The PHICH may be arranged in only the OFDM symbol that is the head of the subframe or may be arranged so as to be distributed in a plurality of OFDM symbols where the PDCCH is arranged. In each subframe, a plurality of PHICHs is frequency-multiplexed and code-multiplexed.

In the PHICH of the downlink subframe after a predetermined time (for example, 4 ms, 4 subframes or 4 TTIs) from the transmission of the PUSCH, the mobile station apparatus 1 receives a HARQ feedback for this PUSCH. In which PHICH within the downlink subframe the HARQ indicator for the PUSCH is arranged is determined by the number of a physical resource block whose number is the lowest (in the lowest frequency domain) among physical resource blocks allocated to this PUSCH and information included in the uplink grant and used for determining a cyclic shift used for the uplink reference signal time-multiplexed with the PUSCH.

The PDSCH is arranged in the OFDM symbols other than the OFDM symbol where the PDCCH, the PCFICH and the PHICH of the subframe (in Fig. 2, regions that are not hatched) are arranged. The radio resources of the PDSCH are allocated using the downlink assignment. In the time domain, the radio resources of the PDSCH are arranged in the same downlink subframe as the PDCCH including the downlink assignment used for the allocation of this PDSCH. In each subframe, a plurality of PDSCHs is frequency-multiplexed and space-multiplexed. For ease of description, the downlink reference signal is not shown in Fig. 2; the downlink reference signal is arranged so as to be distributed in the frequency domain and the time domain.

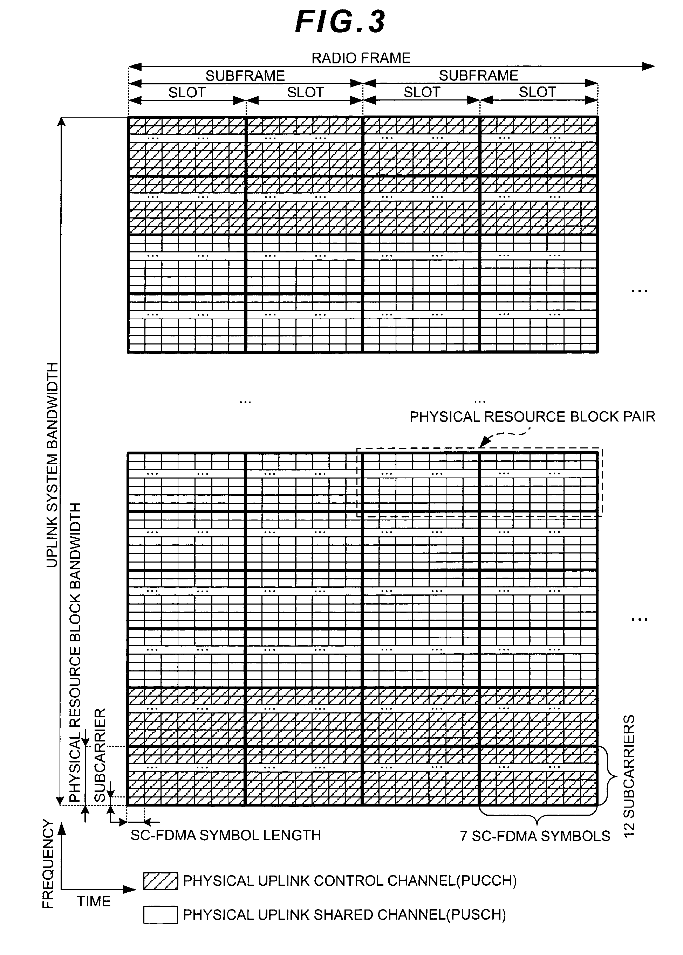

Fig. 3 is a schematic diagram showing an example of the configuration of an uplink radio frame according to an embodiment of the present invention. In Fig. 3, the horizontal axis represents a time domain and the vertical axis represents a frequency domain. As shown in Fig. 3, the uplink radio frame is formed with a plurality of uplink physical resource block pairs (for example, a region surrounded by broken lines of Fig. 3). The uplink physical resource block pair is a unit for the allocation of radio resources or the like, and is formed with a frequency band of a predetermined width (PRB bandwidth; 180 kHz) and a time zone (two slots = one subframe; 1 ms).

One uplink physical resource block pair is formed with two uplink physical resource blocks contiguous in the time domain (PRB bandwidth × slot). One uplink physical resource block (in Fig. 3, a unit surrounded by thick lines) is formed with twelve subcarriers (15 kHz) in the frequency domain and is formed with seven SC-FDMA symbols (71 µs) in the time domain.

In the time domain, there are a slot (0.5 ms) formed with the seven SC-FDMA (Single-Carrier Frequency Division Multiple Access) symbols (71 µs), the subframe (1 ms) formed with two slots and the radio frame (10 ms) formed with ten subframes. The time interval of 1 ms equal to that of the subframe is also referred to as a Transmit Time Interval (TTI). In the frequency domain, a plurality of uplink physical resource blocks is arranged according to the uplink bandwidth. A unit formed with one subcarrier and one SC-FDMA symbol is referred to as an uplink resource element.

The arrangement of physical channels allocated within the uplink radio frame will be described below. In each subframe of the uplink, the PUCCH, the PUSCH, the uplink reference signal and the like are arranged. The PUCCH is arranged in the physical resource block at each end of the uplink band (a region hatched by leftward oblique lines). In each subframe, a plurality of PUCCHs is multiplexed in frequency and multiplexed in code.

The PUSCH is arranged in the uplink physical resource block pair (a region that is not hatched) other than the physical resource block where the PUCCH is arranged. The radio resources of the PUSCH are allocated using the uplink grant, and are arranged in the uplink subframe a predetermined time (for example, 4 ms, 4 subframes or 4 TTIs) after the downlink subframe where the PDCCH including this uplink grant is arranged. In each subframe, a plurality of PUSCHs is frequency-multiplexed and space-multiplexed. Although, the uplink reference signal is time-multiplexed with the PUCCH and the PUSCH, its detailed description will be omitted for ease of description.

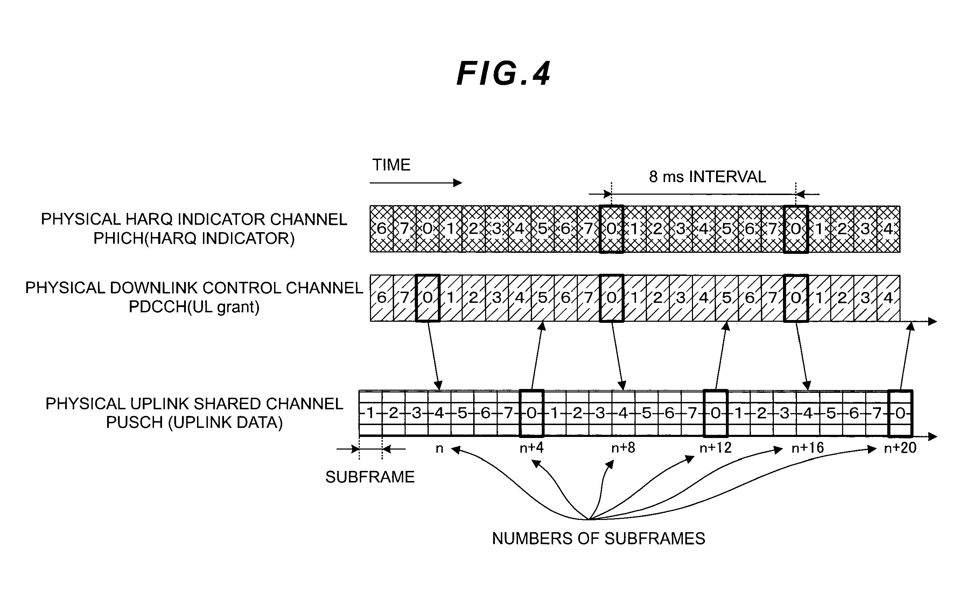

Fig. 4 is a schematic diagram for illustrating an uplink HARQ process according to an embodiment of the present invention. In Fig. 4, the horizontal axis represents the time domain, rectangles hatched by mesh lines represent the PHICH, rectangles hatched by rightward oblique lines represent the PDCCH (uplink grant), rectangles hatched by horizontal lines represent the PUSCH and numbers given to the PHICH, the PDCCH and the PUSCH represent the numbers of the HARQ process corresponding to the individual physical channels. In an embodiment of the present invention, a plurality (eight) of HARQ processes is operated independently and simultaneously.

The number of the HARQ process corresponding to the PUSCH is associated with the number of the uplink subframe. For example, the value of a remainder obtained by dividing the number of the subframe by the number of simultaneously operated HARQ processes is assumed to be the number of the HARQ process corresponding to the subframe. The number of the HARQ process corresponding to the PHICH and the PDCCH (uplink grant) is associated with the number of the downlink subframe. In the uplink and the downlink, the number of the corresponding HARQ process is shifted by four. In addition, the PHICH, the PDCCH (uplink grant) and the PUSCH for the same HARQ process are transmitted at intervals of 8 ms (8 subframes, 8 TTIs).

Each HARQ process is related to buffers (hereinafter referred to as HARQ buffers) having the same number as the uplink data (transport block) that can be transmitted by one PUSCH. In the mobile station apparatus 1, the uplink data to be transmitted by the PUSCH are stored in the HARQ buffer of the HARQ process corresponding to the PUSCH, and the finally received uplink grant by the corresponding PDCCH is stored. In the base station apparatus 3, the uplink data received by the PUSCH and decoded is stored in the HARQ buffer of the HARQ process corresponding to the PUSCH, and the finally transmitted uplink grant by the corresponding PDCCH is stored.

For example, in Fig. 4, the mobile station apparatus 1 receives, with the n-th downlink subframe, the PDCCH (uplink grant) indicating the new transmission on the 0-th HARQ process, and performs, with the (n + 4)-th uplink subframe, the new transmission of the PUSCH on the 0-th HARQ process according to the PDCCH (uplink grant). The mobile station apparatus 1 receives, with the (n+ 8)-th downlink subframe, the PHICH and the PDCCH (uplink grant) on the 0-th HARQ process, and performs, with the (n + 12)-th uplink subframe, the new transmission or the retransmission of the PUSCH on the 0-th HARQ process according to the PHICH or the PDCCH (uplink grant).

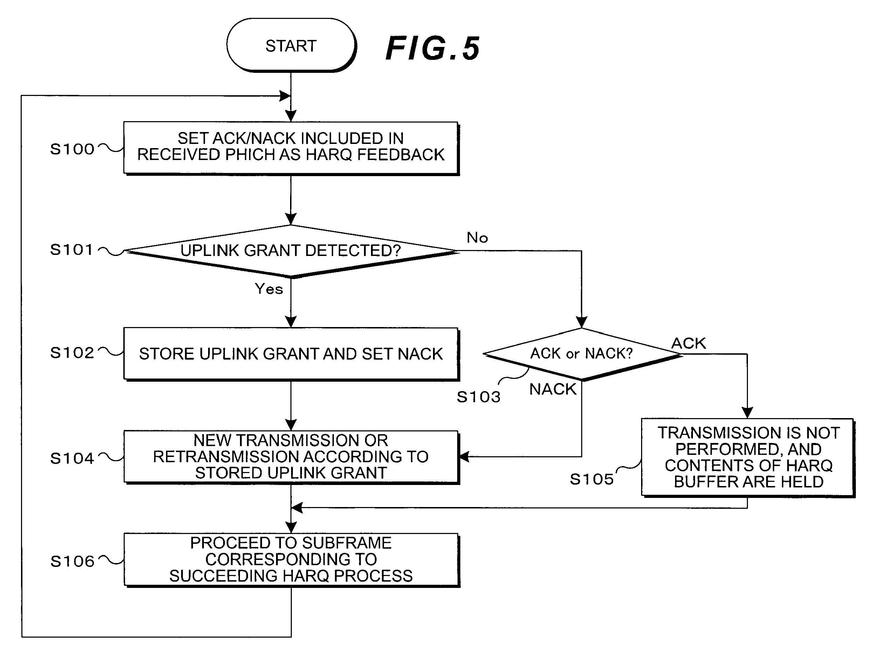

Fig. 5 is a flowchart showing the operation of the HARQ process according to an embodiment of the present invention. The mobile station apparatus 1 performs the processing of Fig. 5 in each HARQ process. In case that the processing of the HARQ process is started, the mobile station apparatus 1 receives the PHICH corresponding to the HARQ process, and sets ACK or NACK indicated by the HARQ indicator included in the received PHICH as the HARQ feedback (step S100). Then, the mobile station apparatus 1 determines whether or not the uplink grant addressed to its own apparatus is detected (step S101). The mobile station apparatus 1, in case that determining that the uplink grant is detected, stores the detected uplink grant, sets NACK as the HARQ feedback (step S102) and performs the new transmission or the retransmission of the uplink data by the PUSCH according to the stored uplink grant (step S104).

In case that the detected uplink grant indicates the new transmission of the uplink data, the mobile station apparatus 1 determines, without depending on the ACK or NACK set as the HARQ feedback, new uplink data to be transmitted by the PUSCH, stores the uplink data in the HARQ buffer and performs the new transmission of the uplink data by the PUSCH according to the stored uplink grant.

In case that the detected uplink grant indicates the retransmission of the uplink data, the mobile station apparatus 1 retransmits, without depending on the ACK or NACK set as the HARQ feedback, the uplink data stored in the HARQ buffer by the PUSCH according to the stored uplink grant. In case that the HARQ buffer is empty, the mobile station apparatus 1 determines, without depending on whether the detected uplink grant indicates the new transmission or the retransmission, the uplink data to be transmitted by the PUSCH, stores the uplink data in the HARQ buffer and performs the new transmission of the PUSCH according to the stored uplink grant.

The mobile station apparatus 1, in case that determining that, in step S101, the uplink grant is not detected, determines which of the ACK or NACK is set as the HARQ feedback (step S103). The mobile station apparatus 1, in case that determining that, in step S103, the NACK is set as the HARQ feedback and the HARQ buffer is not empty, retransmits, by the PUSCH, the uplink data stored in the HARQ buffer according to the stored uplink grant (step S104). In case that determining that, in step S103, the ACK is set as the HARQ feedback or the HARQ buffer is empty, the mobile station apparatus 1 does not transmit the PUSCH, and holds the contents of the HARQ buffer corresponding to the HARQ process (step S105).

After step S104 and step S105, the mobile station apparatus 1 returns to step S100 in the succeeding downlink subframe corresponding to this HARQ process (step S106), and receives the PHICH for the HARQ process. If the HARQ buffer related to the HARQ process is empty, if the HARQ process has not been used for communication with the base station apparatus 3 since the mobile station apparatus 1 was turned on or if the ACK is set as the HARQ feedback, the mobile station apparatus 1 does not need to receive, in step S100, the PHICH corresponding to this HARQ process. If, after the contents of the HARQ buffer are held in step S105, the uplink grant indicting the retransmission is received, the contents of the HARQ buffer can be retransmitted by the PUSCH.

That the mobile station apparatus 1 detects the uplink grant indicating the retransmission of the uplink data to retransmit the uplink data according to the detected uplink grant is expressed to be adaptive HARQ; that the mobile station apparatus 1 does not detect the uplink grant, NACK is set as the HARQ feedback and the uplink data is retransmitted according to the already stored uplink grant is expressed to be non-adaptive HARQ.

The mobile station apparatus 1 of an embodiment of the present invention counts the number of times the uplink data is retransmitted for each piece of uplink data (transport block) transmitted by the same PUSCH, and flushes, in case that the number of times any piece of uplink data is retransmitted reaches a predetermined value, all the uplink data stored in the HARQ buffer on this HARQ process.

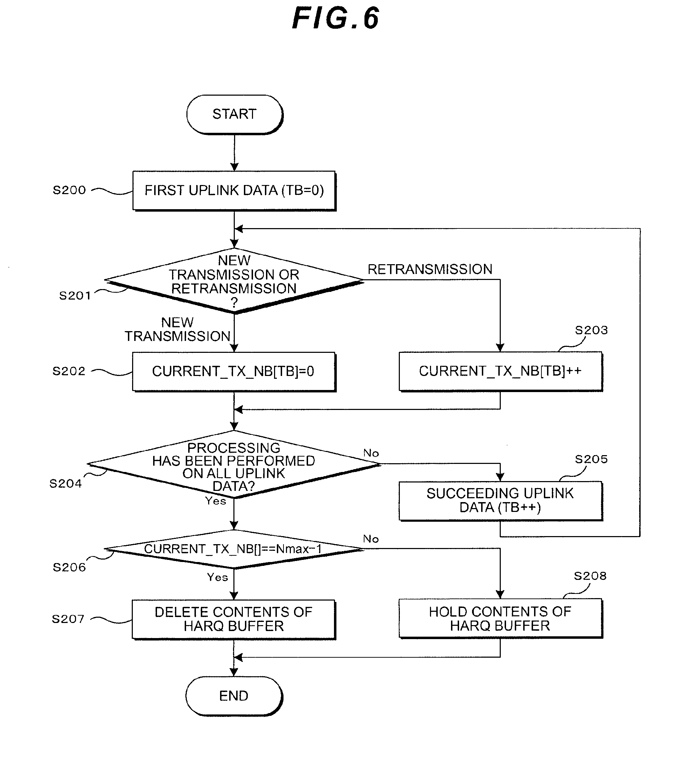

Fig. 6 is a flowchart showing an example of the operation of the mobile station apparatus 1 according to an embodiment of the present invention. The mobile station apparatus 1, each time performing the new transmission or the retransmission of the PUSCH according to the flowchart of Fig. 5, performs processing on the deletion or the holding of the contents of the HARQ buffer according to the flowchart of Fig. 6. The mobile station apparatus 1 performs the following processing for each piece of uplink data (transport block) transmitted by the same PUSCH. The mobile station apparatus 1 determines whether the first piece of uplink data transmitted by the same PUSCH is initially transmitted or retransmitted (step S201). The mobile station apparatus 1, in case that determining that, in step S201, the uplink data is initially transmitted, sets CURRENT_TX_NB[TB] to "0" (step S202).

The mobile station apparatus 1, in case that determining that, in step S201, the uplink data is retransmitted, increments CURRENT_TX_NB[TB] by "1" (step S203). CURRENT_TX_NB[TB] is a counter that stores the number of times the uplink data is transmitted and indicates it; TB indicates the number of the uplink data (transport block) transmitted by the same PUSCH. In other words, the mobile station apparatus 1 has the counter that counts the number of times each piece of uplink data transmitted by the same PUSCH is transmitted.

After step S202 or step S203, the mobile station apparatus 1 determines whether or not the processing from step S201 is performed on all the uplink data (transport block) transmitted by the same PUSCH (step S204). If the mobile station apparatus 1 determines that, in step S204, the processing from step S201 is not performed on all the uplink data (transport block) transmitted by the same PUSCH, the mobile station apparatus 1 performs the processing from step S201 on the succeeding piece of uplink data (step S205) transmitted by the same PUSCH.

If the mobile station apparatus 1 determines that, in step S204, the processing from step S201 is performed on all the uplink data (transport block) transmitted by the same PUSCH, the mobile station apparatus 1 determines whether or not CURRENT_TX_NB[TB] for any piece of uplink data is equal to "Nmax-1" (step S206). Nmax is a parameter that indicates the maximum number of times the uplink data is transmitted; Nmax may be previously defined or the base station apparatus 3 may set Nmax for each mobile station apparatus 1 to provide a notification using a RRC signal (Radio Resource Control Signal).

If, in step S206, the mobile station apparatus 1 determines that any of CURRENT_TX_NB[TB] for the uplink data is equal to "Nmax-1, " all the uplink data (transport block) stored in this HARQ buffer on the HARQ process are flushed (step S207) . If, in step S206, the mobile station apparatus 1 determines that all of CURRENT_TX_NB[TB] for the uplink data are not equal to "Nmax-1," all the uplink data stored in the HARQ buffer on this HARQ process are not flushed but held (step S208). After step S207 or step S208, the mobile station apparatus 1 completes the processing on the deletion or the holding of the contents of the HARQ buffer.

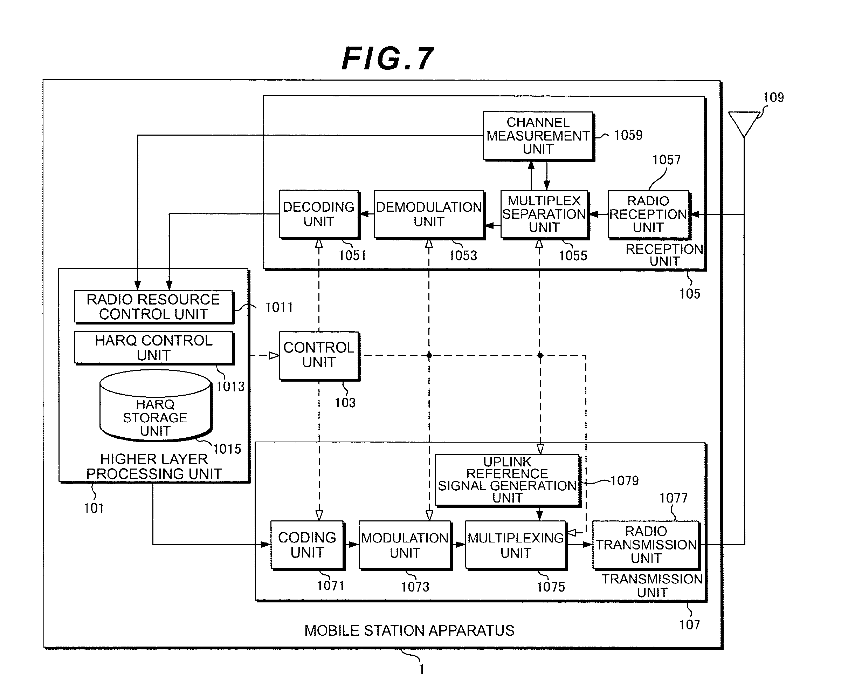

Fig. 7 is a schematic block diagram showing the configuration of the mobile station apparatus 1 according to an embodiment of the present invention. As shown in the figure, the mobile station apparatus 1 is configured to include a higher layer processing unit 101, a control unit 103, a reception unit 105, a transmission unit 107 and a transmission/reception antenna 109. In addition, the higher layer processing unit 101 is configured to include a radio resource control unit 1011, a HARQ control unit 1013 and a HARQ storage unit 1015. Moreover, the reception unit 105 is configured to include a decoding unit 1051, a demodulation unit 1053, a multiplex separation unit 1055, a radio reception unit 1057 and a channel measurement unit 1059. Furthermore, the transmission unit 107 is configured to include a coding unit 1071, a modulation unit 1073, a multiplexing unit 1075, a radio transmission unit 1077 and an uplink reference signal generation unit 1079.

The higher layer processing unit 101 outputs, to the transmission unit 107, the uplink data generated by the user operation or the like. Furthermore, the higher layer processing unit 101 performs processing on a Medium Access Control (MAC) layer, a Packet Data Convergence Protocol (PDCP) layer, a Radio Link Control (RLC) layer and a Radio Resource Control (RRC) layer. In addition, the higher layer processing unit 101 generates, based on the downlink control information received by the PDCCH or the like, control information for controlling the reception unit 105 and the transmission unit 107, and outputs it to the control unit 103. The radio resource control unit 1011 included in the higher layer processing unit 101 manages various types of setting information on its own apparatus. For example, the radio resource control unit 1011 manages RNTI such as C-RNTI. Moreover, the radio resource control unit 1011 generates information arranged in each uplink channel, and outputs it to the transmission unit 107.

The HARQ control unit 1013 included in the higher layer processing unit 101 manages the uplink HARQ process. The HARQ storage unit 1015 included in the higher layer processing unit 101 has the HARQ buffer related to each uplink HARQ process managed by the HARQ control unit 1013. The HARQ storage unit 1015 stores the uplink grant related to each HARQ process, the HARQ feedback (ACK or NACK) and the number of times the uplink data is transmitted. Since the downlink HARQ process is not related to an embodiment of the present invention, its description will be omitted.

The HARQ control unit 1013 performs the following operation for each HARQ process. The HARQ control unit 1013 inputs the uplink data (transport block) transmitted by the PUSCH to the HARQ buffer, and stores, in the HARQ storage unit 1015, ACK or NACK indicated by the HARQ indicator received by the PHICH input from the reception unit 105 and the uplink grant received by the PDCCH. Based on ACK or NACK stored in the HARQ storage unit 1015 and the uplink grant, the HARQ control unit 1013 controls the HARQ according to the flowchart of Fig. 5 and the flowchart of Fig. 6.

The HARQ control unit 1013 stores the number of times each piece of uplink data is transmitted in a counter included in the HARQ storage unit 1015 for each piece of uplink data transmitted by the same PUSCH. Based on the ACK or NACK stored in the HARQ storage unit 1015 and the uplink grant, the HARQ control unit 1013 performs control to reset the number of times the uplink data is transmitted, which is stored in the counter of the HARQ storage unit 1015, to "0" or to increment it by "1." In case that the counter of the HARQ storage unit 1015 corresponding to any piece of uplink data reaches a predetermined number of times (predetermined maximum number of times of transmission), the HARQ control unit 1013 flushes all the uplink data (transport block) stored in all the HARQ buffers corresponding to all the uplink data transmitted by the same PUSCH of the HARQ storage unit 1015.

The HARQ control unit 1013 associates the number (timing) of the uplink subframe in which the PUSCH is transmitted, with the HARQ process. Among a plurality of PHICHs within the downlink subframe, the HARQ control unit 1013 determines the PHICH corresponding to this HARQ process from the allocation of the physical resource block of the PUSCH and information included in the uplink grant on the cyclic shift of the uplink reference signal time-multiplexed with the PUSCH. The HARQ control unit 1013 determines the HARQ process corresponding to the detected uplink grant from the number (timing) of the downlink subframe where the uplink grant is detected.

Based on control information from the higher layer processing unit 101, the control unit 103 generates a control signal for controlling the reception unit 105 and the transmission unit 107. The control unit 103 outputs the generated control signal to the reception unit 105 and the transmission unit 107 to control the reception unit 105 and the transmission unit 107. According to the control signal input from the control unit 103, the reception unit 105 separates, demodulates and decodes the reception signal received from the base station apparatus 3 through the transmission/reception antenna 109, and outputs the decoded information to the higher layer processing unit 101.

The radio reception unit 1057 converts the downlink signal received through the transmission/reception antenna 109 into an intermediate frequency (downconverts), eliminates an unnecessary frequency component, controls an amplification level to approximately maintain the signal level, performs orthogonal demodulation based on an in-phase component and an orthogonal component of the received signal and converts the orthogonally demodulated analog signal into a digital signal. The radio reception unit 1057 removes a part corresponding to a Guard Interval (GI) from the converted digital signal, performs Fast Fourier Transform (FFT) on the signal having the guard interval removed and extracts the signal in a frequency domain.

The multiplex separation unit 1055 separates the extracted signal into the PHICH, the PDCCH, the PDSCH and the downlink reference signal. This separation is performed based on allocation information on the radio resource notified in the downlink assignment or the like. Moreover, the multiplex separation unit 1055 compensates for the channels of the PHICH, the PDCCH and the PDSCH from the estimation values of the channels input from the channel measurement unit 1059. In addition, the multiplex separation unit 1055 outputs the separated downlink reference signal to the channel measurement unit 1059.

The demodulation unit 1053 multiplies the PHICH by the corresponding code to compose a signal, demodulates the composed signal with a BPSK (Binary Phase Shift Keying) modulation scheme and outputs it to the decoding unit 1051. The decoding unit 1051 decodes the PHICH addressed to its own apparatus, and outputs the decoded HARQ indicator to the higher layer processing unit 101. The demodulation unit 1053 demodulates the PDCCH with a QPSK modulation scheme, and outputs it to the decoding unit 1051. The decoding unit 1051 attempts to perform blind decoding on the PDCCH, and outputs, if the blind decoding is successfully performed, the decoded downlink control information and the RNTI included in the decoded downlink control information to the higher layer processing unit 101.

The demodulation unit 1053 demodulates the PDSCH with a modulation scheme notified in the downlink assignment, such as QPSK (Quadrature Phase Shift Keying), 16QAM (Quadrature Amplitude Modulation) or 64QAM, and outputs it to the decoding unit 1051. The decoding unit 1051 performs decoding based on information on the coding rate notified in the downlink control information, and outputs the decoded downlink data (transport block) to the higher layer processing unit 101.

The channel measurement unit 1059 measures a pass loss and the state of the channel in the downlink from the downlink reference signal input from the multiplex separation unit 1055, and outputs the pass loss and the state of the channel that have been measured to the higher layer processing unit 101. The channel measurement unit 1059 calculates the estimation value of the downlink channel from the downlink reference signal, and outputs it to the multiplex separation unit 1055.

The transmission unit 107 generates the uplink reference signal according to the control signal input from the control unit 103, codes and modulates the uplink data (transport block) input from the higher layer processing unit 101, multiplexes the PUCCH, the PUSCH and the generated uplink reference signal and transmits them to the base station apparatus 3 through the transmission/reception antenna 109. The coding unit 1071 performs coding such as convolution coding or block coding on the uplink control information input from the higher layer processing unit 101, and performs turbo coding on the uplink data based on the information on the coding rate notified by the uplink grant.

The modulation unit 1073 modulates the coded bit input from the coding unit 1071 with the modulation scheme notified in the downlink control information, such as BPSK, QPSK, 16QAM or 64QAM or the modulation scheme predetermined for each channel. Based on the number of sequences notified in the uplink grant and spatially multiplexed and information indicating precoding performed on the sequences, the modulation unit 1073 maps, with MIMO SM, the sequences of modulation symbols of a plurality of pieces of uplink data transmitted by the same PUSCH over a plurality of sequences greater in number than the uplink data transmitted by the same PUSCH, and performs precoding on the sequences.

The uplink reference signal generation unit 1079 generates sequences which are determined by a predetermined rule based on a physical cell identity (referred to as PCI, Cell ID or the like) for identifying the base station apparatus 3, a bandwidth where the uplink reference signal is arranged, a cyclic shift notified by the uplink grant and the like and which the base station apparatus 3 already knows. According to the control signal input from the control unit 103, the multiplexing unit 1075 realigns the modulation symbols of the PUSCH into parallel and then performs Discrete Fourier Transform (DFT), and multiplexes the signals of the PUCCH and the PUSCH and the generated uplink reference signal for each transmission antenna port.

The radio transmission unit 1077 performs Inverse Fast Fourier Transform (IFFT) on the multiplexed signal to perform the modulation of SC-FDMA scheme, adds the guard interval to the SC-FDMA symbol that has been subjected to the SC-FDMA modulation, generates the digital signal of a base band, converts the digital signal of the base band into an analogue signal, generates the in-phase component and the orthogonal component of the intermediate frequency from the analogue signal, removes an extra frequency component in the intermediate frequency band, converts the signal of the intermediate frequency into the signal of a high frequency (upconverts), removes the extra frequency component, amplifies power and transmits it by outputting it to the transmission/reception antenna 109.

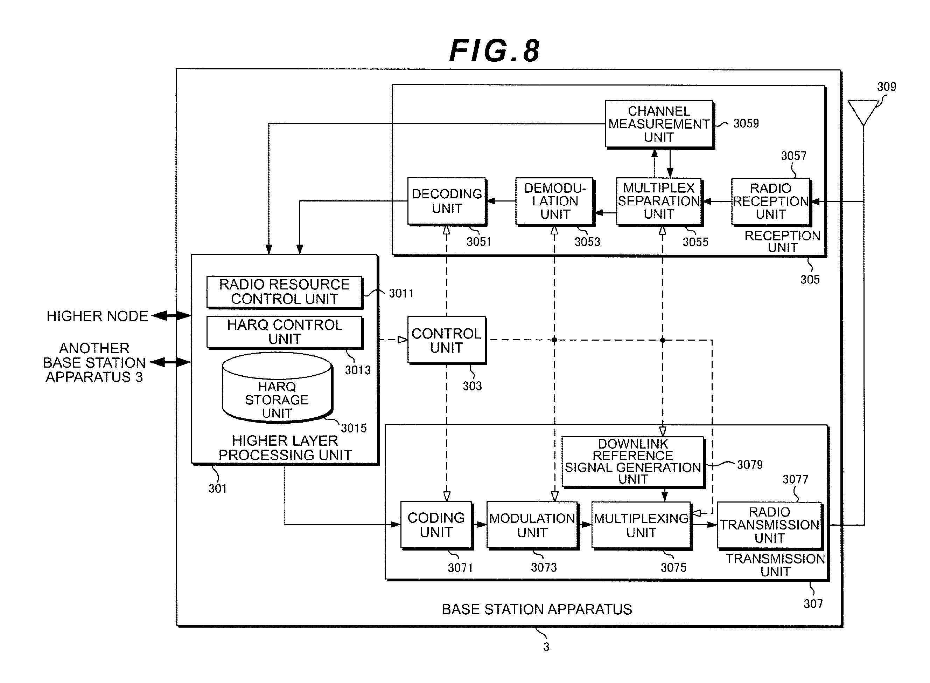

Fig. 8 is a schematic block diagram showing the configuration of the base station apparatus 3 according to an embodiment of the present invention. As shown in the figure, the base station apparatus 3 is configured to include a higher layer processing unit 301, a control unit 303, a reception unit 305, a transmission unit 307 and a transmission/reception antenna 309. Moreover, the higher layer processing unit 301 is configured to include a radio resource control unit 3011, a HARQ control unit 3013 and a HARQ storage unit 3015. The reception unit 305 is configured to include a decoding unit 3051, a demodulation unit 3053, a multiplex separation unit 3055, a radio reception unit 3057 and a channel measurement unit 3059. Furthermore, the transmission unit 307 is configured to include a coding unit 3071, a modulation unit 3073, a multiplexing unit 3075, a radio transmission unit 3077 and a downlink reference signal generation unit 3079.

The higher layer processing unit 301 performs processing on the Medium Access Control (MAC) layer, the Packet Data Convergence Protocol (PDCP), the Radio Link Control (RLC) layer and the Radio Resource Control (RRC) layer. The higher layer processing unit 301 generates control information for controlling the reception unit 305 and the transmission unit 307, and outputs it to the control unit 303. The radio resource control unit 3011 included in the higher layer processing unit 301 generates the downlink data (transport block) arranged in the downlink PDSCH, the RRC signal, the MAC CE (Control Element) or acquires them from a higher node and outputs them to the transmission unit 307. The radio resource control unit 3011 manages various types of setting information on the mobile station apparatus 1. For example, the radio resource control unit 3011 manages the RNTI such the allocation of the C-RNTI to the mobile station apparatus 1.

The HARQ control unit 3013 included in the higher layer processing unit 301 manages the uplink HARQ process of each of the mobile station apparatuses 1. The HARQ storage unit 3015 included in the higher layer processing unit 301 has a plurality of HARQ buffers corresponding to the uplink HARQ processes managed by the HARQ control unit 3013. Since the downlink HARQ process is not related to an embodiment of the present invention, its description is omitted. The HARQ control unit 3013 inputs the uplink data (transport block) input from the reception unit 305 and received in the PUSCH to the HARQ buffer, and determines whether or not the uplink data is successfully decoded using an error detection code (cyclic redundancy check code) added to the uplink data.

In case that the HARQ control unit 3013 determines that the uplink data is successfully decoded, the HARQ control unit 3013 generates the HARQ indicator indicating ACK whereas, in case that the HARQ control unit 3013 determines that the uplink data is unsuccessfully decoded, the HARQ control unit 3013 generates the HARQ indicator indicating NACK and outputs it to the transmission unit 307. In case that the HARQ control unit 3013 determines that the uplink data is unsuccessfully decoded, the HARQ control unit 3013 may control the transmission unit 307 through the control unit 303 such that the HARQ control unit 3013 changes the information on the radio resource allocation, the modulation scheme and the coding rate and transmits the uplink grant indicating the retransmission including the changed information.

In case that the uplink data retransmitted by the mobile station apparatus 1 is input from the reception unit 305, the HARQ control unit 3013 combines the uplink data already stored in the HARQ buffer with the uplink data retransmitted, and determines whether or not the uplink data is successfully decoded. The HARQ control unit 3013 makes the number (timing) of the uplink subframe where the mobile station apparatus 1 transmits the PUSCH correspond to the number of the HARQ process.

For a certain HARQ process, among a plurality of PHICHs, the HARQ control unit 3013 determines, from the allocation of the physical resource block of the PUSCH and information included in the uplink grant on the cyclic shift of the uplink reference signal multiplexed in time with the PUSCH, the PHICH used for transmission of ACK/NACK corresponding to this HARQ process.

Based on control information from the higher layer processing unit 301, the control unit 303 generates a control signal for controlling the reception unit 305 and the transmission unit 307. The control unit 303 outputs the generated control signal to the reception unit 305 and the transmission unit 307 to control the reception unit 305 and the transmission unit 307.

According to the control signal input from the control unit 303, the reception unit 305 separates, demodulates and decodes, through the transmission/reception antenna 309, the reception signal received from the mobile station apparatus 1, and outputs the decoded information to the higher layer processing unit 301. The radio reception unit 3057 converts the uplink signal received through the transmission/reception antenna 309 into an intermediate frequency (downconverts), flushes an unnecessary frequency component, controls an amplification level to approximately maintain the signal level, performs orthogonal demodulation based on an in-phase component and an orthogonal component of the received signal and converts the orthogonally demodulated analog signal into a digital signal. The radio reception unit 3057 removes a unit corresponding to a Guard Interval (GI) from the converted digital signal. The radio reception unit 3057 performs Fast Fourier Transform (FFT) on the signal having the guard interval removed, extracts the signal in a frequency domain and outputs it to the multiplex separation unit 3055.

The multiplex separation unit 3055 separates the signal input from the radio reception unit 3057 into signals such as the PUCCH, the PUSCH and the uplink reference signal. This separation is previously determined through the radio resource control unit 3011 by the base station apparatus 3 and is performed based on information on the allocation of the radio sources included in the uplink grant notified to each mobile station apparatus 1. Moreover, the multiplex separation unit 3055 compensates for the channels of the PUCCH and the PUSCH from the estimation values of the channels input from the channel measurement unit 3059. In addition, the multiplex separation unit 3055 outputs the separated uplink reference signal to the channel measurement unit 3059.

The demodulation unit 3053 performs Inverse Discrete Fourier Transform (IDFT) on the PUSCH, acquires a modulation symbol and demodulates the reception signal on each modulation symbol of the PUCCH and the PUSCH using a predetermined modulation scheme such as BPSK (Binary Phase Shift Keying), QPSK, 16QAM or 64QAM or a modulation scheme previously notified by the apparatus itself to each mobile station apparatus 1 with the uplink grant. Based on the number of sequences previously notified to each mobile station apparatus 1 with the uplink grant and multiplexed in space and information for instructing the sequences to perform the precoding, the demodulation unit 3053 using MIMO SM, separates the modulation symbol of a plurality of pieces of uplink data transmitted by the same PUSCH.

The decoding unit 3051 decodes the coded bit of the demodulated PUCCH and PUSCH with a predetermined coding scheme at a coding rate either predetermined or previously notified by the apparatus itself to each mobile station apparatus 1 with the uplink grant, and outputs the decoded uplink data and the uplink control information to the higher layer processing unit 301. In the case of the retransmission of the PUSCH, the decoding unit 3051 performs decoding using the coded bit input from the higher layer processing unit 301 and stored in the HARQ buffer and the demodulated coded bit. The channel measurement unit 3059 measures the estimation value of the channel, the quality of the channel and the like from the uplink reference signal input from the multiplex separation unit 3055, and outputs them to the multiplex separation unit 3055 and the higher layer processing unit 301.

The transmission unit 307 generates the downlink reference signal according to the control signal input from the control unit 303, codes and modulates the HARQ indicator, the downlink control information and the downlink data input from the higher layer processing unit 301, multiplexes the PUICH, the PDCCH and the PDSCH and the downlink reference signal and transmits them to the mobile station apparatus 1 through the transmission/reception antenna 309.

The coding unit 3071 codes the HARQ indicator, the downlink control information and the downlink data input from the higher layer processing unit 301, using a predetermined coding scheme such as block coding, convolution coding or turbo coding or codes them using a coding scheme determined by the radio resource control unit 3011. The modulation unit 3073 modulates the coded bit input from the coding unit 3071 with a predetermined modulation scheme such as BPSK, QPSK, 16QAM or 64QAM or a modulation scheme determined by the radio resource control unit 3011. The downlink reference signal generation unit 3079 generates, as downlink reference signal, sequences which are determined by a predetermined rule and in which the mobile station apparatus 1 is known based on the physical cell identity (PCI) for identifying the base station apparatus 3. The multiplexing unit 3075 multiplexes the modulation symbol of each modulated channel and the generated downlink reference signal.

The radio transmission unit 3077 performs Inverse Fast Fourier Transform (IFFT) on the multiplexed modulation symbol to perform the modulation of OFDM scheme, adds the guard interval to the OFDM symbol that has been subjected to the OFDM modulation, generates the digital signal of a base band, converts the digital signal of the base band into an analogue signal, generates the in-phase component and the orthogonal component of the intermediate frequency from the analogue signal, removes an extra frequency component in the intermediate frequency band, converts (upconverts) the signal of the intermediate frequency into the signal of a high frequency, removes the extra frequency component, amplifies power and transmits it by outputting it to the transmission/reception antenna 309.

As described above, according to an embodiment of the present invention, in the mobile station apparatus 1 that uses the same PUSCH to transmit a plurality of pieces of uplink data (transport block) to the base station apparatus 3, the mobile station apparatus 1 counts the number of times the uplink data is retransmitted for each piece of uplink data transmitted by the same PUSCH, and flushes, in case that the number of times of retransmission of any piece of uplink data reaches a predetermined value, all the uplink data stored in the HARQ buffer on this HARQ process.

In this way, since the base station apparatus 3 can recognize in what case the mobile station apparatus 1 flushes the uplink data from the HARQ buffer, the base station apparatus 3 can effectively retransmit the PUSCH. Furthermore, in case that the mobile station apparatus 1 erroneously detects the uplink grant for another mobile station apparatus 1, and thus erroneously transmits the PUSCH without control by the base station apparatus 3, the base station apparatus 3 cannot detect the erroneously transmitted PUSCH, and transmit the HARQ indicator of ACK to this PUSCH; moreover, since it is not possible to transmit a correct uplink grant to the mobile station apparatus 1 transmitting this PUSCH, the mobile station apparatus 1 continues to retransmit the PUSCH with a non-adaptive HARQ. However, with the application of an embodiment of the present invention, in case that the number of times of transmission of the uplink data reaches the maximum number of times of transmission, the uplink data stored in the HARQ buffer is flushed, and the retransmission of the PUSCH is stopped, with the result that it is possible to stop the erroneous transmission of the PUSCH by the mobile station apparatus 1.

In case that the mobile station apparatus 1 erroneously transmits the PUSCH, since it can cause interference with the PUSCH transmitted from another mobile station apparatus 1, it is necessary to immediately stop the retransmission of the PUSCH being erroneously transmitted. According to the first embodiment of the present invention, in case that the number of times of retransmission of any piece of uplink data reaches a predetermined value, the mobile station apparatus 1 flushes all the uplink data stored in the HARQ buffer on this HARQ process to stop the transmission of the PUSCH, with the result that it is possible to stop quickly the erroneous transmission of the PUSCH.

### (Second embodiment)

A second embodiment of the present invention will be described in detail below with reference to accompanying drawings.

In the second embodiment of the present invention, the mobile station apparatus 1 counts the number of times the uplink data is retransmitted for each piece of uplink data transmitted by the same PUSCH, and flushes, in case that the number of times of retransmission of any piece of uplink data reaches a predetermined value, only uplink data which is stored in the HARQ buffer and in which the number of times of retransmission reaches a predetermined value.

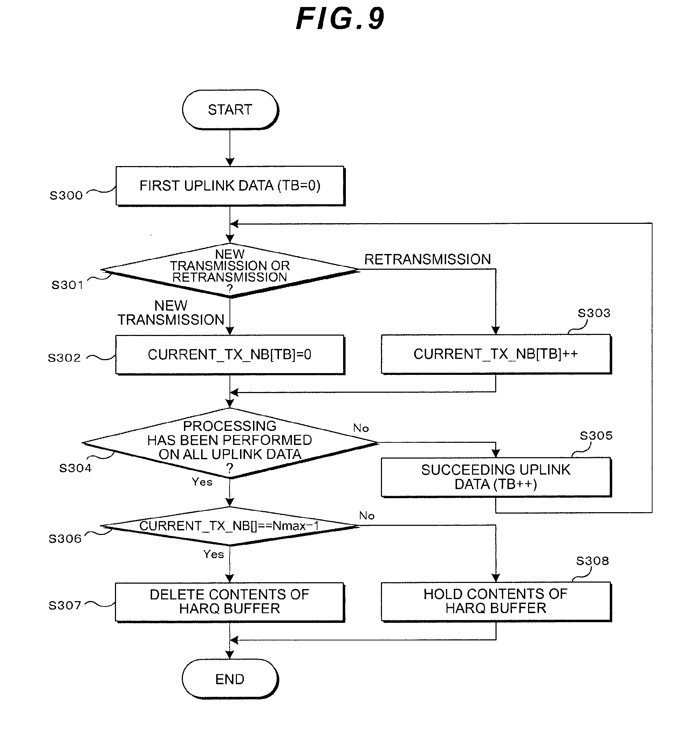

Fig. 9 is a flowchart showing an example of the operation of the mobile station apparatus 1 according to the second embodiment of the present invention. In case that the flowchart of Fig. 6 according to the first embodiment is compared with the flowchart of Fig. 9 according to the second embodiment, processing from step S206 to step S208 and processing from step S306 to step S308 are different. However, since the configuration and the function in the other steps are the same as those in the flowchart of Fig. 6, the description of the same steps as in the flowchart of Fig. 6 will not be repeated.

If, in step S306, the mobile station apparatus 1 determines that any CURRENT_TX_NB[TB] is equal to "Nmax-1," the mobile station apparatus 1 flushes, from the HARQ buffer, the uplink data (transport block) where the CURRENT_TX_NB[TB] stored in the HARQ buffer reaches "Nmax-1," and does not flush, from the HARQ buffer, the uplink data (transport block) where the CURRENT_TX_NB[TB] does not reach "Nmax-1" and holds it (step S307) . If, in step S306, the mobile station apparatus 1 determines that all CURRENT_TX_NB[TB] are not equal to "Nmax-1" (does not reach "Nmax-1"), the mobile station apparatus 1 does not flush all the uplink data stored in the HARQ buffer on this HARQ process (step S308).

In case that the radio communication system of the second embodiment is compared with the radio communication system of the first embodiment, the higher layer processing unit 101 of the mobile station apparatus 1 is different. However, since the configuration and the function in the other constituent elements are the same as those in the first embodiment, the description of the same function as in the first embodiment will not be repeated. The HARQ control unit 1013 of the higher layer processing unit 101 of the mobile station apparatus 1 according to the second embodiment controls the HARQ according to the flowchart of Fig. 9 instead of the flowchart of Fig. 6.

In the HARQ control unit 1013 of the second embodiment, the number of times each piece of uplink data is transmitted is stored in a counter included in the HARQ storage unit 1015 for each piece of uplink data transmitted by the same PUSCH. Based on the ACK or NACK stored in the HARQ storage unit 1015 and the uplink grant, the HARQ control unit 1013 performs control to reset the number of times the uplink data is transmitted stored in the counter of the HARQ storage unit 1015 to "0" or to increment it by "1." In case that the counter of the HARQ storage unit 1015 corresponding to any piece of uplink data reaches a predetermined number of times (predetermined maximum number of times of transmission), the HARQ control unit 1013 flushes, from the HARQ buffer, the uplink data where the counter of the HARQ storage unit 1015 reaches a predetermined number of times.

In case that, among a plurality of pieces of uplink data transmitted by the same PUSCH, only part of the uplink data is flushed from the HARQ buffer, and a plurality of pieces of uplink data is transmitted in the PUSCH with the non-adaptive HARQ using MIMO SM, the mobile station apparatus 1 may output a dummy bit to a physical layer instead of the uplink data flushed in the PUSCH from the HARQ buffer, or may not output nothing as the uplink data to the physical layer. The dummy bit may be formed with a MAC subheader indicating a padding and a pudding bit or may be a bit sequence having no meaning. Thus, it is possible to continue communication using MIMO SM.

In this way, since the base station apparatus 3 can recognize in what case the mobile station apparatus 1 flushes the uplink data from the HARQ buffer, the base station apparatus 3 can effectively retransmit the PUSCH.

In case that the mobile station apparatus 1 erroneously detects the uplink grant for another mobile station apparatus 1, and thus erroneously transmits the PUSCH without control by the base station apparatus 3, the base station apparatus 3 cannot detect the erroneously transmitted PUSCH, and transmit the HARQ indicator of ACK to this PUSCH; moreover, since it is not possible to transmit a correct uplink grant to the mobile station apparatus 1 transmitting this PUSCH, the mobile station apparatus 1 continues to retransmit the PUSCH with the non-adaptive HARQ. However, with the application of an embodiment of the present invention, in case that the number of times of transmission of the uplink data reaches the maximum number of times of transmission, the uplink data stored in the HARQ buffer is flushed, and the retransmission of the PUSCH is stopped, with the result that it is possible to stop the erroneous transmission of the PUSCH by the mobile station apparatus 1.

Since, in the first embodiment, the mobile station apparatus 1 counts the number of times the uplink data is retransmitted for each piece of uplink data transmitted by the same PUSCH, and flushes, in case that the number of times of retransmission of any piece of uplink data reaches a predetermined value, all the uplink data stored in the HARQ buffer on this HARQ process, if the uplink data in which the number of times of retransmission reaches the predetermined value is present, the uplink data immediately after the new transmission is performed is flushed together from the HARQ buffer. Since the uplink data immediately after the new transmission is performed is uplink data immediately after the mobile station apparatus 1 provides an instruction of transmission using the uplink grant, it is preferable to prevent it from being flushed from the HARQ buffer.

Since, in the second embodiment of the present invention, the mobile station apparatus 1 counts the number of times the uplink data is retransmitted for each piece of uplink data transmitted by the same PUSCH, and flushes, in case that the number of times of retransmission of any piece of uplink data reaches a predetermined value, only uplink data which is stored in the HARQ buffer and in which the number of times of retransmission reaches a predetermined value, though the uplink data in which the number of times of retransmission reaches the predetermined value is flushed from the HARQ buffer, the uplink data immediately after the new transmission is performed is not flushed together from the HARQ buffer. As described above, in the second embodiment, it is possible to realize independent retransmission control for each piece of uplink data transmitted by the same PUSCH.

### (Third embodiment)

A third embodiment of the present invention will be described in detail below with reference to accompanying drawings.

In the third embodiment of the present invention, the mobile station apparatus 1 counts the number of times the uplink data which is retransmitted for each piece of uplink data transmitted by the same PUSCH, and flushes, in case that the number of times of retransmission of all pieces of uplink data reaches a predetermined value, all uplink data which is stored in the HARQ buffer on this HARQ process. In other words, the number of times the uplink data which is retransmitted is counted for each piece of uplink data transmitted by the same PUSCH, and, even if the number of times of retransmission of part of the uplink data reaches the predetermined value, all uplink data which is stored in the HARQ buffer on this HARQ process is not flushed.

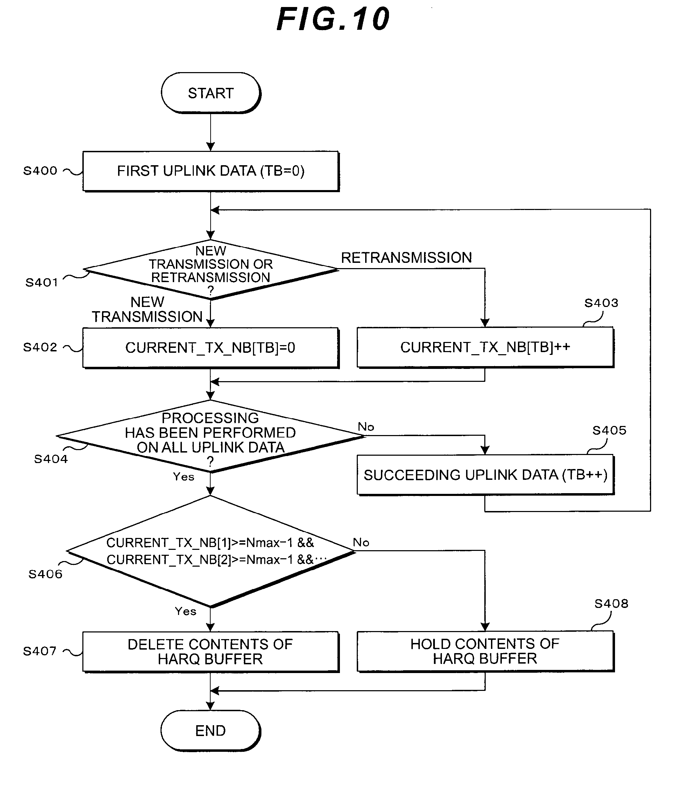

Fig. 10 is a flowchart showing an example of the operation of the mobile station apparatus 1 according to the third embodiment of the present invention. In case that the flowchart of Fig. 10 according to the third embodiment is compared with the flowchart of Fig. 6 according to the first embodiment, processing in step S206 and processing in step S406 are different. However, since the configuration and the function in the other steps are the same as those in the flowchart of Fig. 6, the description of the same steps as in the flowchart of Fig. 6 will not be repeated.

In step S406, the mobile station apparatus 1 determines whether or not all CURRENT_TX_NB[TB] are equal to or larger than "Nmax-1." If the mobile station apparatus 1 determines that all CURRENT_TX_NB[TB] are equal to or larger than "Nmax-1, " all uplink data (transport block) stored in the HARQ buffer on this HARQ process is flushed (step S407). If the mobile station apparatus 1 determines that any CURRENT_TX_NB[TB] is less than "Nmax-1," all uplink data (transport block) stored in the HARQ buffer on this HARQ process is not flushed but held (step S408).

In case that the radio communication system of the third embodiment is compared with the radio communication system of the first embodiment, the higher layer processing unit 101 of the mobile station apparatus 1 is different. However, since the configuration and the function in the other constituent elements are the same as those in the first embodiment, the description of the same function as in the first embodiment will not be repeated. The HARQ control unit 1013 of the higher layer processing unit 101 of the mobile station apparatus 1 according to the third embodiment controls the HARQ according to the flowchart of Fig. 10 instead of the flowchart of Fig. 6.

In the HARQ control unit 1013 of the third embodiment, the number of times each piece of uplink data is transmitted is stored in a counter included in the HARQ storage unit 1015 for each piece of uplink data transmitted by the same PUSCH. Based on the ACK or NACK stored in the HARQ storage unit 1015 and the uplink grant, the HARQ control unit 1013 performs control to reset the number of times the uplink data is transmitted stored in the counter of the HARQ storage unit 1015 to "0" or to increment it by "1." In case that all the counters of the HARQ storage unit 1015 corresponding to the uplink data reach a predetermined number of times (predetermined maximum number of times of transmission), the HARQ control unit 1013 flushes all uplink data (transport block) stored in all HARQ buffers corresponding to all uplink data transmitted by the same PUSCH of the HARQ storage unit 1015.

In this way, since the base station apparatus 3 can recognize in what case the mobile station apparatus 1 flushes the uplink data from the HARQ buffer, the base station apparatus 3 can effectively retransmit the PUSCH. In addition, in case that the mobile station apparatus 1 erroneously detects the uplink grant for another mobile station apparatus 1, and thus erroneously transmits the PUSCH without control by the base station apparatus 3, the base station apparatus 3 cannot detect the erroneously transmitted PUSCH, and transmit the HARQ indicator of ACK to this PUSCH; moreover, since it is not possible to transmit a correct uplink grant to the mobile station apparatus 1 transmitting this PUSCH, the mobile station apparatus 1 continues to retransmit the PUSCH with the non-adaptive HARQ. However, with the application of an embodiment of the present invention, in case that the number of times the uplink data which is transmitted reaches the maximum number of times of transmission, the uplink data stored in the HARQ buffer is flushed, and the retransmission of the PUSCH is stopped, with the result that it is possible to stop the erroneous transmission of the PUSCH by the mobile station apparatus 1.

Since, in the first embodiment, the mobile station apparatus 1 counts the number of times the uplink data is retransmitted for each piece of uplink data transmitted by the same PUSCH, and flushes, in case that the number of times of retransmission of any piece of uplink data reaches a predetermined value, all the uplink data stored in the HARQ buffer on this HARQ process, if the uplink data in which the number of times of retransmission reaches the predetermined value is present, the uplink data immediately after the new transmission is performed is flushed together from the HARQ buffer. Since the uplink data immediately after the new transmission is performed is uplink data immediately after the mobile station apparatus 1 provides an instruction of transmission using the uplink grant, it is preferable to prevent it from being flushed from the HARQ buffer. In the third embodiment, even if, among a plurality of pieces of uplink data transmitted by the same PUSCH, the number of times of retransmission of part of the uplink data reaches the predetermined value, since all uplink data stored in the HARQ buffer is not flushed, the uplink data immediately after the new transmission is performed is not flushed.

In case that the third embodiment is compared with the second embodiment, whether or not, among a plurality of pieces of uplink data transmitted by the same PUSCH, part of the uplink data in which the number of times of retransmission reaches the predetermined value is flushed from the HARQ buffer is different. Although, in the second embodiment, the dummy bit is transmitted instead of the uplink data flushed from the HARQ buffer, whether the dummy bit is transmitted or the uplink data is transmitted, in case that the PUSCH is erroneously transmitted, interference with the PUSCH of another mobile station apparatus 1 inevitably occurs. Hence, in the third embodiment, in case that, among a plurality of pieces of uplink data transmitted by the same PUSCH, there is a piece of uplink data in which the number of times of retransmission does not reach the predetermined value, all uplink data is not flushed from the HARQ buffer but retransmitted. Thus, it is possible to continue the communication using MIMO SM and to enhance the possibility that the uplink data is properly decoded on the reception side.

### (Fourth embodiment)

A fourth embodiment of the present invention will be described in detail below with reference to accompanying drawings.

In the fourth embodiment of the present invention, the mobile station apparatus 1 includes a common counter (CURRENT_TX_NB) for a plurality of pieces of uplink data transmitted by the same PUSCH, and flushes, in case that this counter reaches a predetermined value, all uplink data stored in the HARQ buffer related to this HARQ process. In case that any of the plurality of pieces of uplink data transmitted by the same PUSCH is initially transmitted, the mobile station apparatus 1 sets the counter to "0" whereas, in case that all uplink data transmitted in the same uplink shared channel is retransmitted, the mobile station apparatus 1 increments the counter by "1."

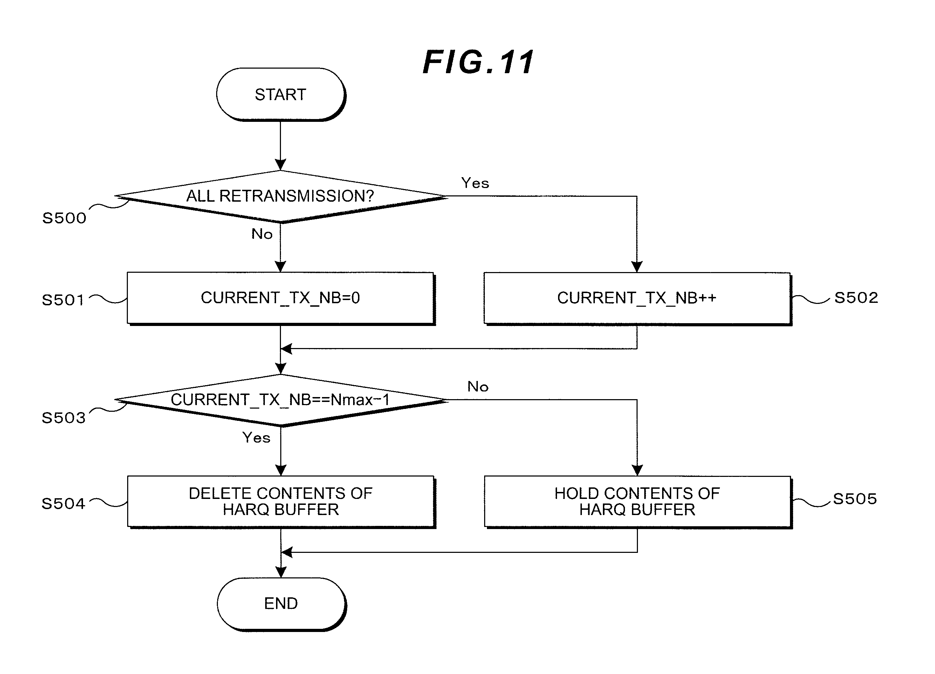

Fig. 11 is a flowchart showing an example of the operation of the mobile station apparatus 1 according to the fourth embodiment of the present invention. The mobile station apparatus 1 first determines whether or not all pieces of uplink data (transport block) transmitted by the same PUSCH are retransmitted (step S500). If the mobile station apparatus 1 determines that all uplink data is not retransmitted, that is, at least one piece of uplink data is initially transmitted, the mobile station apparatus 1 sets the counter (CURRENT_TX_NB) to "0" (step S501). If the mobile station apparatus 1 determines that all uplink data is retransmitted, the mobile station apparatus 1 increments the counter (CURRENT_TX_NB) by "1" (step S502).

After step S501 or step S502, the mobile station apparatus 1 determines whether or not the CURRENT_TX_NB is equal to "Nmax-1" (step S503). If the mobile station apparatus 1 determines that the CURRENT_TX_NB is equal to "Nmax-1," the mobile station apparatus 1 flushes all uplink data (transport block) stored in the HARQ buffer related to this HARQ process (step S504). If the mobile station apparatus 1 determines that the CURRENT_TX_NB is not equal to "Nmax-1," the mobile station apparatus 1 does not flushes all uplink data stored in the HARQ buffer related to this HARQ process but holds it(step S505). After step S504 or step S505, the mobile station apparatus 1 completes the processing related to the deletion or the holding of the contents of the HARQ buffer.

In case that the radio communication system of the fourth embodiment is compared with the radio communication system of the first embodiment, the higher layer processing unit 101 of the mobile station apparatus 1 is different. However, since the configuration and the function in the other constituent elements are the same as those in the first embodiment, the description of the same function as in the first embodiment will not be repeated. The HARQ control unit 1013 of the higher layer processing unit 101 of the mobile station apparatus 1 according to the fourth embodiment controls the HARQ according to the flowchart of Fig. 11 instead of the flowchart of Fig. 6.

The HARQ control unit 1013 of the fourth embodiment stores a counter common to the uplink data transmitted by the same PUSCH included in the HARQ storage unit 1015. Based on the ACK or NACK stored in the HARQ storage unit 1015 and the uplink grant, the HARQ control unit 1013 performs control to reset the value stored in the counter of the HARQ storage unit 1015 to "0" or to increment it by "1." In case that the counter of the HARQ storage unit 1015 reaches a predetermined number of times (predetermined maximum number of times of transmission), the HARQ control unit 1013 flushes all uplink data (transport block) stored in all HARQ buffers corresponding to all uplink data transmitted by the same PUSCH of the HARQ storage unit 1015.

In this way, since the base station apparatus 3 can recognize in what case the mobile station apparatus 1 flushes the uplink data from the HARQ buffer, the base station apparatus 3 can effectively retransmit the PUSCH. As compared with the flowchart of Fig. 6, in the flowchart of Fig. 11, it is not necessary to have a counter for each piece of uplink data transmitted by the same PUSCH and thus it is possible to simplify the configuration of the mobile station apparatus 1.

In this way, since the base station apparatus 3 can recognize in what case the mobile station apparatus 1 flushes the uplink data from the HARQ buffer, the base station apparatus 3 can effectively retransmit the PUSCH. Moreover, in case that the mobile station apparatus 1 erroneously detects the uplink grant for another mobile station apparatus 1, and thus erroneously transmits the PUSCH without control by the base station apparatus 3, the base station apparatus 3 cannot detect the erroneously transmitted PUSCH, and transmit the HARQ indicator of ACK to this PUSCH; moreover, since it is not possible to transmit a correct uplink grant to the mobile station apparatus 1 transmitting this PUSCH, the mobile station apparatus 1 continues to retransmit the PUSCH with the non-adaptive HARQ. However, with the application of an embodiment of the present invention, in case that the number of times the uplink data which is transmitted reaches the maximum number of times of transmission, the uplink data stored in the HARQ buffer is flushed, and the retransmission of the PUSCH is stopped, with the result that it is possible to stop the erroneous transmission of the PUSCH by the mobile station apparatus 1.

### (Fifth embodiment)

A fifth embodiment of the present invention will be described in detail below with reference to accompanying drawings.

In the fifth embodiment of the present invention, in case that the number of times the uplink data (transport block) retransmitted with the non-adaptive HARQ reaches a predetermined number of times, the mobile station apparatus 1 flushes all uplink data stored in the HARQ buffer on this HARQ process. Specifically, the mobile station apparatus 1 includes a common counter (CURRENT_TX_NB) for a plurality of pieces of uplink data (transport block) transmitted by the same PUSCH, and flushes, in case that this counter reaches a predetermined value, all uplink data stored in the HARQ buffer related to this HARQ process. In case that, based on the uplink grant detecting a plurality of pieces of uplink data transmitted by the same PUSCH, new transmission or retransmission using the adaptive HARQ is performed, the mobile station apparatus 1 sets the counter (CURRENT_TX_NB) to "0" whereas, in case that all uplink data transmitted in the same uplink shared channel is retransmitted with the non-adaptive HARQ, the mobile station apparatus 1 increments the counter by "1."

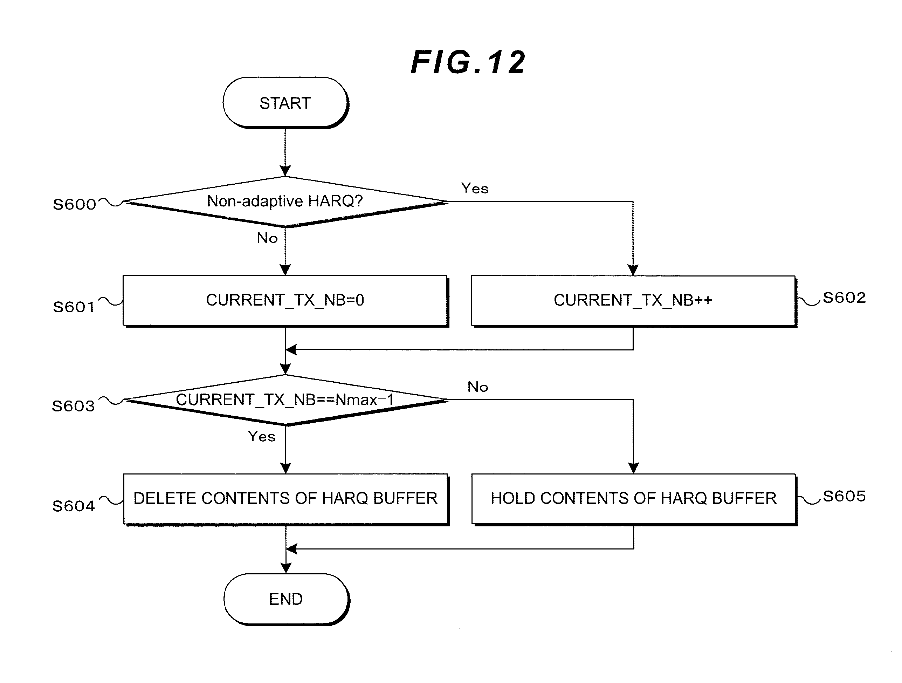

Fig. 12 is a flowchart showing an example of the operation of the mobile station apparatus 1 according to the fifth embodiment of the present invention. In case that the flowchart of Fig. 11 according to the fourth embodiment is compared with the flowchart of Fig. 12 according to the fifth embodiment, step S500 is different from step S600. However, since the configuration and the function in the other steps are the same as those in the flowchart of Fig. 11, the description of the same steps as in the flowchart of Fig. 11 will not be repeated.

In step 5600, the mobile station apparatus 1 determines whether or not a plurality of pieces of uplink data transmitted by the same PUSCH is retransmitted with the non-adaptive HARQ. In step S600, if the mobile station apparatus 1 determines that a plurality of pieces of uplink data transmitted by the same PUSCH are transmitted in a method other than the retransmission using the non-adaptive HARQ, that is, if the mobile station apparatus 1 determines that, based on the uplink grant, the new transmission of the uplink data or the retransmission based on the adaptive HARQ is performed, the mobile station apparatus 1 sets the counter (CURRENT_TX_NB) to "0" (step 5601).

In step S600, if the mobile station apparatus 1 determines that a plurality of pieces of uplink data transmitted by the same PUSCH is retransmitted with the non-adaptive HARQ, the mobile station apparatus 1 increments the counter (CURRENT_TX_NB) by "1" (step S602). The new transmission and the adaptive HARQ are not performed simultaneously with the non-adaptive HARQ. If, among a plurality of pieces of uplink data transmitted by the same PUSCH, the HARQ indicator for part of the uplink data indicates ACK, and the HARQ indicator for the remainder of the uplink data indicates NACK, the mobile station apparatus 1 performs the non-adaptive HARQ on only the uplink data in which the NACK is indicated by the HARQ indicator, and does not transmit the uplink data in which the ACK is indicated by the HARQ indicator. Instead of this uplink data that is not transmitted, the mobile station apparatus 1 may output the dummy bit to the physical later or may not output anything to the physical layer as the uplink data.

In case that the radio communication system of the fifth embodiment is compared with the radio communication system of the first embodiment, the higher layer processing unit 101 of the mobile station apparatus 1 is different. However, since the configuration and the function in the other constituent elements are the same as those in the first embodiment, the description of the same function as in the first embodiment will not be repeated. The HARQ control unit 1013 of the higher layer processing unit 101 of the mobile station apparatus 1 according to the fifth embodiment controls the HARQ according to the flowchart of Fig. 12 instead of the flowchart of Fig. 6.

The HARQ control unit 1013 of the fifth embodiment stores a counter common to the uplink data transmitted by the same PUSCH included in the HARQ storage unit 1015. Based on the ACK or NACK stored in the HARQ storage unit 1015 and the uplink grant, the HARQ control unit 1013 performs control to reset the value stored in the counter of the HARQ storage unit 1015 to "0" or to increment it by "1." In case that the counter of the HARQ storage unit 1015 reaches a predetermined number of times (predetermined maximum number of times of transmission), the HARQ control unit 1013 flushes all uplink data (transport block) stored in all HARQ buffers corresponding to all uplink data transmitted by the same PUSCH of the HARQ storage unit 1015.

In this way, since the base station apparatus 3 can recognize in what case the mobile station apparatus 1 flushes the uplink data from the HARQ buffer, the base station apparatus 3 can effectively retransmit the PUSCH.

In addition, in case that the mobile station apparatus 1 erroneously detects the uplink grant for another mobile station apparatus 1, and thus erroneously transmits the PUSCH without control by the base station apparatus 3, the base station apparatus 3 cannot detect the erroneously transmitted PUSCH, and transmit the HARQ indicator of ACK to this PUSCH, and thus the mobile station apparatus 1 continues to retransmit the PUSCH with the non-adaptive HARQ. However, with the application of an embodiment of the present invention, in case that the number of times the uplink data is transmitted reaches the maximum number of times of transmission, the uplink data stored in the HARQ buffer is flushed, and the retransmission of the PUSCH is stopped, with the result that it is possible to stop the erroneous transmission of the PUSCH by the mobile station apparatus 1.

Furthermore, in an embodiment of the present invention, in case that the mobile station apparatus 1 retransmits the uplink data based on the adaptive HARQ, since the mobile station apparatus 1 does not flush the uplink data stored in the HARQ buffer, the number of tines of retransmission in the mobile station apparatus 1 is not limited in case that the base station apparatus 3 uses the uplink data to retransmit the uplink data with the adaptive HARQ. In this way, the base station apparatus 3 appropriately grasps the conditions of transmission in the mobile station apparatus 1, the mobile station apparatus 1 can continue to retransmit the uplink data in case that the mobile station apparatus 1 is under such appropriate control by the base station apparatus 3 that retransmission is performed based on the uplink grant and it is possible to prevent the problem in which the mobile station apparatus 1 erroneously detects the PHICH to continue unnecessary retransmission of the uplink data.

Note that although, in the fifth embodiment, the counter is incremented by "1" at the time of the non-adaptive HARQ and the counter is set to "0" in case that the PUSCH is transmitted according to the uplink grant, the counter may be incremented by "1" at the time of the non-adaptive HARQ, the counter may be set to "0" in case that the PUSCH is initially transmitted according to the uplink grant and the value of the counter may be held in case that the PUSCH is retransmitted (adaptive HARQ) according to the uplink grant. Without departing from the spirit of the present invention, it is possible to use a combination between any of the first to third embodiments of the present invention and the fifth embodiment of the present invention.

For example, in the first embodiment, it is possible to use a combination with the fifth embodiment of the present invention such that, in step S201, according to whether the transmission using the non-adaptive HARQ or the transmission using the uplink grant is performed, the mobile station apparatus 1 controls the counter for the number of times of transmission, and the mobile station apparatus 1 performs the processing in step S203 if the mobile station apparatus 1 determines that the transmission using the non-adaptive HARQ is performed whereas the mobile station apparatus 1 performs the processing in step S202 if the mobile station apparatus 1 determines that the transmission using the uplink grant is performed. As with what has been described above, it is possible to use a combination of any of step S301 in the second embodiment and shown in Fig. 9 and step S401 in the third embodiment and shown in Fig. 10 and the fifth embodiment of the present invention.

A program that is operated in the base station apparatus 3 and the mobile station apparatus 1 according to the present invention may be a program (program for making a computer function) for controlling a CPU (Central Processing Unit) or the like so as to realize the functions of the embodiments according to the present invention. Then, information handled in these apparatuses is temporarily accumulated in a RAM (Random Access Memory) after the processing thereof, is thereafter stored in various ROMs such as a flash ROM (Read Only Memory) and HDDs (Hard Disk Drives), and is read and modified/written by the CPU as necessary.

It is to be noted that, a part of the mobile station apparatus 1 and the base station apparatus 3 according to the embodiments described above may be realized by a computer. In this case, the program for realizing this control function may be recorded in a computer-readable recording medium, and the program recorded in the recording medium may be read in a computer system and be performed. The "computer system" described here refers to a computer system that is incorporated in the mobile station apparatus 1 or the base station apparatus 3, and includes an OS and hardware such as peripheral apparatuses.

Furthermore, the "computer-readable recording medium" refers to a portable medium such as a flexible disk, a magnet-optical disk, a ROM or a CD-ROM or a storage apparatus such as a hard disk that is incorporated in the computer system. Furthermore, the "computer-readable recording medium" may include a product that dynamically holds the program for a short period of time such as a communication line used in case that the program is transmitted through a network such as the Internet or a communication line such as a telephone line and a product that temporarily holds the program such as a volatile memory within the computer system serving as a server and a client in this case. The program described above may be designed to realize the part of the function described above or may be designed to realize the function described above with a combination with a program already recorded in the computer system.

In addition, a part or all of the mobile station apparatus 1 and the base station apparatus 3 of the embodiments described above may be typically realized as an LSI, which is an integrated circuit. Each functional block of the mobile station apparatus 1 and the base station apparatus 3 may be individually formed into a chip; a part or all may be integrated into a chip. The integrated circuit formation method may be realized with a dedicated circuit or a general-purpose processor instead of the LSI. In case that an integrated circuit formation technology for replacing the LSI is designed with the advance of the semiconductor technology, it is also possible to use an integrated circuit formed by such technology.

(A) In addition, the present invention can adopt the following aspects. Specifically, a mobile station apparatus of an embodiment of the present invention is a mobile station apparatus that uses the same uplink shared channel to transmit a plurality of pieces of uplink data to a base station apparatus, counts the number of times the uplink data is retransmitted for each piece of uplink data transmitted in the same uplink shared channel and flushes all uplink data from a buffer in case that, among the pieces of uplink data transmitted in the same uplink shared channel, the number of times any piece of the uplink data is retransmitted reaches a predetermined value.

(B) Furthermore, the mobile station apparatus of an embodiment of the present invention is a mobile station apparatus that uses the same uplink shared channel to transmit a plurality of pieces of uplink data to the base station apparatus, counts the number of times the uplink data is retransmitted for each piece of uplink data transmitted in the same uplink shared channel and flushes, in case that, among the pieces of uplink data transmitted in the same uplink shared channel, the number of times any piece of the uplink data is retransmitted reaches the predetermined value, only the piece of the uplink data in which the number of times of the retransmission reaches the predetermined value from the buffer.

(C) Moreover, the mobile station apparatus of an embodiment of the present invention is a mobile station apparatus that uses the same uplink shared channel to transmit a plurality of pieces of uplink data to the base station apparatus, counts the number of times the uplink data is retransmitted for each piece of uplink data transmitted in the same uplink shared channel and flushes, in case that, among the pieces of uplink data transmitted in the same uplink shared channel, the number of times of retransmission of all pieces of the uplink data reaches the predetermined value, all pieces of the uplink data from the buffer.

(D) In addition, the mobile station apparatus of an embodiment of the present invention is a mobile station apparatus that uses the same uplink shared channel to transmit a plurality of pieces of uplink data to the base station apparatus sets, in case that any piece of uplink data transmitted in the same uplink shared channel is initially transmitted, a common counter to "0" with the plurality of pieces of uplink data transmitted in the same uplink shared channel, increments, in case that all pieces of uplink data transmitted in the same uplink shared channel are retransmitted, the counter by "1" and flushes, in case that the counter reaches the predetermined value, all pieces of uplink data from the buffer.

(E) Furthermore, the mobile station apparatus of an embodiment of the present invention is a mobile station apparatus that uses the same uplink shared channel to transmit a plurality of pieces of uplink data to the base station apparatus sets, in case that downlink control information for the uplink shared channel is received, the common counter to "0" with the plurality of pieces of uplink data transmitted in the same uplink shared channel, increments, in case that the uplink data transmitted in the uplink channel is retransmitted with a non-adaptive HARQ, the counter by "1" and flushes, in case that the counter reaches the predetermined value, all pieces of uplink data from the buffer.

(F) Moreover, a radio communication method of an embodiment of the present invention is a radio communication method that is used by the mobile station apparatus which uses the same uplink shared channel to transmit a plurality of uplink data to the base station apparatus, and the radio communication method includes a step of counting the number of times the uplink data is retransmitted for each piece of uplink data transmitted in the same uplink shared channel and a step of deleting, in case that, among the pieces of uplink data transmitted in the same uplink shared channel, the number of times any piece of the uplink data is retransmitted reaches the predetermined value, all pieces of the uplink data from the buffer.

(G) In addition, the radio communication method of an embodiment of the present invention is a radio communication method that is used by the mobile station apparatus which uses the same uplink shared channel to transmit a plurality of uplink data to the base station apparatus, and the radio communication method includes the step of counting the number of times the uplink data is retransmitted for each piece of uplink data transmitted in the same uplink shared channel and a step of deleting, in case that, among the pieces of uplink data transmitted in the same uplink shared channel, the number of times any piece of the uplink data is retransmitted reaches the predetermined value, only the piece of the uplink data in which the number of times of the retransmission reaches the predetermined value from the buffer.

(H) Furthermore, the radio communication method of an embodiment of the present invention is a radio communication method that is used by the mobile station apparatus which uses the same uplink shared channel to transmit a plurality of uplink data to the base station apparatus, and the radio communication method includes the step of counting the number of times the uplink data is retransmitted for each piece of uplink data transmitted in the same uplink shared channel and a step of deleting, in case that, among the pieces of uplink data transmitted in the same uplink shared channel, the number of times of retransmission of all pieces of the uplink data reaches the predetermined value, all pieces of the uplink data from the buffer.

(I) Moreover, the radio communication method of an embodiment of the present invention is a radio communication method that is used by the mobile station apparatus which uses the same uplink shared channel to transmit a plurality of uplink data to the base station apparatus, and the radio communication method includes a step of setting, in case that any piece of uplink data transmitted in the same uplink shared channel is initially transmitted, the common counter to "0" with the plurality of pieces of uplink data transmitted in the same uplink shared channel, a step of incrementing, in case that all pieces of uplink data transmitted in the same uplink shared channel are retransmitted, the counter by "1" and a step of deleting, in case that the counter reaches the predetermined value, all pieces of uplink data from the buffer.

(J) In addition, the radio communication method of an embodiment of the present invention is a radio communication method that is used by the mobile station apparatus which uses the same uplink shared channel to transmit a plurality of uplink data to the base station apparatus, and the radio communication method includes a step of setting, in case that the downlink control information for the uplink shared channel is received, the common counter to "0" with the plurality of pieces of uplink data transmitted in the same uplink shared channel, a step of incrementing, in case that the uplink data transmitted in the uplink channel is retransmitted with the non-adaptive HARQ, the counter by "1" and a step of deleting, in case that the counter reaches the predetermined value, all pieces of uplink data from the buffer.

(K) Furthermore, an integrated circuit of an embodiment of the present invention is an integrated circuit that is used by the mobile station apparatus which uses the same uplink shared channel to transmit a plurality of uplink data to the base station apparatus, and the integrated circuit includes a function of counting the number of times the uplink data is retransmitted for each piece of uplink data transmitted in the same uplink shared channel and a function of deleting, in case that, among the pieces of uplink data transmitted in the same uplink shared channel, the number of times any piece of the uplink data is retransmitted reaches the predetermined value, all pieces of the uplink data from the buffer.

(L) Moreover, the integrated circuit of an embodiment of the present invention is an integrated circuit that is used by the mobile station apparatus which uses the same uplink shared channel to transmit a plurality of uplink data to the base station apparatus, and the integrated circuit includes the function of counting the number of times the uplink data is retransmitted for each piece of uplink data transmitted in the same uplink shared channel and a function of deleting, in case that, among the pieces of uplink data transmitted in the same uplink shared channel, the number of times any piece of the uplink data is retransmitted reaches the predetermined value, only the piece of the uplink data in which the number of times of the retransmission reaches the predetermined value from the buffer.

(M) In addition, the integrated circuit of an embodiment of the present invention is an integrated circuit that is used by the mobile station apparatus which uses the same uplink shared channel to transmit a plurality of uplink data to the base station apparatus, and the integrated circuit includes the step of counting the number of times the uplink data is retransmitted for each piece of uplink data transmitted in the same uplink shared channel and a function of deleting, in case that, among the pieces of uplink data transmitted in the same uplink shared channel, the number of times of retransmission of all pieces of the uplink data reaches the predetermined value, all pieces of the uplink data from the buffer.

(N) Furthermore, the integrated circuit of an embodiment of the present invention is an integrated circuit that is used by the mobile station apparatus which uses the same uplink shared channel to transmit a plurality of uplink data to the base station apparatus, and the integrated circuit includes a function of setting, in case that any piece of uplink data transmitted in the same uplink shared channel is initially transmitted, the common counter to "0" with the plurality of pieces of uplink data transmitted in the same uplink shared channel, a function of incrementing, in case that all pieces of uplink data transmitted in the same uplink shared channel are retransmitted, the counter by "1" and a function of deleting, in case that the counter reaches the predetermined value, all pieces of uplink data from the buffer.

(O) Moreover, the integrated circuit of an embodiment of the present invention is an integrated circuit that is used by the mobile station apparatus which uses the same uplink shared channel to transmit a plurality of uplink data to the base station apparatus, and the integrated circuit includes a function of setting, in case that the downlink control information for the uplink shared channel is received, the common counter to "0" with the plurality of pieces of uplink data transmitted in the same uplink shared channel, a function of incrementing, in case that the uplink data transmitted in the uplink channel is retransmitted with the non-adaptive HARQ, the counter by "1" and a function of deleting, in case that the counter reaches the predetermined value, all pieces of uplink data from the buffer.

Although the embodiment of the present invention has been described in detail above with reference to the drawings, specific configurations are not limited to what has been described above. Various design modifications and the like are possible without departing from the spirit of the present invention.

### Description of Symbols

- 1 (1A, 1B, 1C): mobile station apparatus
- 3: base station apparatus
- 101: higher layer processing unit
- 103: control unit
- 105: reception unit
- 107: transmission unit
- 301: higher layer processing unit
- 303: control unit
- 305: reception unit
- 307: transmission unit
- 1011: radio resource control unit
- 1013: HARQ control unit
- 1015: HARQ storage unit
- 3011: radio resource control unit
- 3013: HARQ control unit
- 3015: HARQ storage unit

## Claims

1. A radio communication method used by a mobile station apparatus that uses a same uplink shared channel to transmit a plurality of uplink data to a base station apparatus, the method comprising the steps of:
by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and
deleting, in case that the counter corresponding to at least one piece of the uplink data reaches a predetermined value, the uplink data from a buffer.

2. A mobile station apparatus that uses a same uplink shared channel to transmit a plurality of uplink data to a base station apparatus, the mobile station apparatus comprising,
a counter that indicates a number of transmission for each of the plurality of uplink data,
wherein the mobile station apparatus:
sets, in case that performing new transmission of the uplink data, a counter corresponding to the uplink data subjected to the new transmission to "0";
increments, in case that performing retransmission of the uplink data, a counter corresponding to the uplink data subjected to the retransmission by "1"; and
flushes, in case that the counter corresponding to at least one piece of the uplink data reaches a predetermined value, the uplink data from a buffer.

3. An integrated circuit used by a mobile station apparatus that uses a same uplink shared channel to transmit a plurality of uplink data to a base station apparatus, the integrated circuit comprising functions of:
by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and
deleting, in case that the counter corresponding to at least one piece of the uplink data reaches a predetermined value, the uplink data from a buffer.

4. A radio communication method used by a mobile station apparatus that uses a same uplink shared channel to transmit a plurality of uplink data to a base station apparatus, the method comprising the steps of:
by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and
deleting, in case that the counter corresponding to at least one piece of the uplink data reaches a predetermined value, all the plurality of uplink data from a buffer.

5. A mobile station apparatus that uses a same uplink shared channel to transmit a plurality of uplink data to a base station apparatus, the mobile station apparatus comprising:
a counter that indicates a number of transmission for each of the plurality of uplink data,
wherein the mobile station apparatus:
sets, in case that performing new transmission of the uplink data, a counter corresponding to the uplink data subjected to the new transmission to "0";
increments, in case that performing retransmission of the uplink data, a counter corresponding to the uplink data subjected to the retransmission by "1"; and
flushes, in case that the counter corresponding to at least one piece of the uplink data reaches a predetermined value, all the plurality of uplink data from a buffer.

6. An integrated circuit used by a mobile station apparatus that uses a same uplink shared channel to transmit a plurality of uplink data to a base station apparatus, the integrated circuit comprising functions of:
by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and
deleting, in case that the counter corresponding to at least one piece of the uplink data reaches a predetermined value, all the plurality of uplink data from a buffer.

7. A radio communication method used by a mobile station apparatus that uses a same uplink shared channel to transmit a plurality of uplink data to a base station apparatus, the method comprising the steps of:
by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and
deleting, in case that the counter corresponding to all the uplink data reaches a predetermined value, all the plurality of uplink data from a buffer.

8. A mobile station apparatus that uses a same uplink shared channel to transmit a plurality of uplink data to a base station apparatus, the mobile station apparatus comprising:
a counter that indicates a number of transmission for each of the plurality of uplink data,
wherein the mobile station apparatus:
sets, in case that performing new transmission of the uplink data, a counter corresponding to the uplink data subjected to the new transmission to "0";
increments, in case that performing retransmission of the uplink data, a counter corresponding to the uplink data subjected to the retransmission by "1"; and
flushes, in case that the counter corresponding to all the uplink data reaches a predetermined value, all the plurality of uplink data from a buffer.

9. An integrated circuit used by a mobile station apparatus that uses a same uplink shared channel to transmit a plurality of uplink data to a base station apparatus, the integrated circuit comprising functions of:
by use of a counter indicating a number of transmission for each of the plurality of uplink data, setting, in case that performing new transmission of the uplink data, a counter corresponding to the uplink data subjected to the new transmission to "0", and incrementing, in case that performing retransmission of the uplink data, a counter corresponding to the uplink data subjected to the retransmission by "1"; and
deleting, in case that the counter corresponding to all the uplink data reaches a predetermined value, all the plurality of uplink data from a buffer.

10. A radio communication method used by a mobile station apparatus that uses a same uplink shared channel to transmit a plurality of uplink data to a base station apparatus, the method comprising the steps of:
setting, in case that performing new transmission of any of the plurality of uplink data transmitted by the same uplink shared channel, a counter common to the plurality of uplink data transmitted by the same uplink shared channel to "0";
incrementing, in case that performing retransmission of all the plurality of uplink data transmitted by the same uplink shared channel, the counter by "1"; and
deleting, in case that the counter reaches a predetermined value, all the uplink data from a buffer.

11. A mobile station apparatus that uses the same uplink shared channel to transmit a plurality of uplink data to a base station apparatus,
wherein the mobile station apparatus:
sets, in case that performing new transmission of any of the plurality of uplink data transmitted by the same uplink shared channel, a counter common to the plurality of uplink data transmitted by the same uplink shared channel to "0";
increments, in case that performing retransmission of all the plurality of uplink data transmitted by the same uplink shared channel, the counter by "1"; and
flushes, in case that the counter reaches a predetermined value, all the uplink data from a buffer.

12. An integrated circuit used by a mobile station apparatus that uses a same uplink shared channel to transmit a plurality of uplink data to a base station apparatus, the integrated circuit comprising functions of:
setting, in case that performing new transmission of any of the plurality of uplink data transmitted by the same uplink shared channel, a counter common to the plurality of uplink data transmitted by the same uplink shared channel to "0";
incrementing, in case that performing retransmission of all the plurality of uplink data transmitted by the same uplink shared channel, the counter by "1"; and
deleting, in case that the counter reaches a predetermined value, all the uplink data from a buffer.

13. A radio communication method used by a mobile station apparatus that uses a same uplink shared channel to transmit a plurality of uplink data to a base station apparatus, the method comprising the steps of:
setting, in case that having received downlink control information for the uplink shared channel, a counter common to the plurality of uplink data transmitted by the same uplink shared channel to "0";
incrementing, in case that performing retransmission of the uplink data transmitted by the uplink channel with a non-adaptive HARQ (Hybrid Automatic Repeat reQuest), the counter by "1"; and
deleting, in case that the counter reaches a predetermined value, all the uplink data from a buffer.

14. A mobile station apparatus that uses a same uplink shared channel to transmit a plurality of uplink data to a base station apparatus,
wherein the mobile station apparatus:
sets, in case that having received downlink control information for the uplink shared channel, a counter common to the plurality of uplink data transmitted by the same uplink shared channel to "0";
increments, in case that performing retransmission of the uplink data transmitted by the uplink channel with a non-adaptive HARQ (Hybrid Automatic Repeat reQuest), the counter by "1"; and
flushes, in case that the counter reaches a predetermined value, all the uplink data from a buffer.

15. An integrated circuit used by a mobile station apparatus that uses a same uplink shared channel to transmit a plurality of uplink data to a base station apparatus, the integrated circuit comprising functions of:
setting, in case that having received downlink control information for the uplink shared channel, a counter common to the plurality of uplink data transmitted by the same uplink shared channel to "0";
incrementing, in case that performing retransmission of the uplink data transmitted by the uplink channel with a non-adaptive HARQ (Hybrid Automatic Repeat reQuest), the counter by "1"; and
deleting, in case that the counter reaches a predetermined value, all the uplink data from a buffer.
